# EUROPEAN PATENT SPECIFICATION

(11) **EP 3 143 369 B1**
(45) Date of publication and mention of the grant of the patent: **25.03.2020**
(21) Application number: 15792443.2
(22) Date of filing: 13.05.2015
(51) Int. Cl.: H04L 29/08, G01D 21/00, H04W 4/14, H04W 4/90, H04W 4/38

(54) **TRIGGER EVENT BASED RESPONSE EXECUTION**
AUSLÖSEREREIGNISBASIERTE REAKTIONSAUSFÜHRUNG
RÉPONSE D'EXÉCUTION A BASE D'ÉVÈNEMENT DE DÉCLENCHEMENT

(30) Priority: 15.05.2014 US 201414278604; 15.05.2014 US 201414278620; 15.05.2014 US 201414278635; 15.05.2014 US 201414278647; 15.05.2014 US 201414278669
(43) Date of publication of application: 22.03.2017
(73) Proprietor: HappyOrNot Oy, 33100 Tampere (FI)
(72) Inventor: PESOLA, Juuso, FI-00950 Helsinki (FI); LEMINEN, Jari, FI-04300 Helsinki (FI); PÖNKÄNEN, Sami, FI-00550 Helsinki (FI); RAUTIO, Harri, FI-00100 Helsinki (FI); HEILAKKA, Erkki, FI-00950 Helsinki (FI)
(74) Representative: Papula Oy
(86) International application number: PCT/FI2015/050333
(87) International publication number: WO 2015/173473

(56) References cited:
- EP-A1- 2 458 407
- WO-A1-2013/190402
- US-A1- 2006 031 457
- US-A1- 2008 137 828
- US-A1- 2009 167 524
- US-A1- 2011 159 895
- US-A1- 2012 075 097
- US-A1- 2012 158 161
- 'Opticam Outdoor F18903W TELE.' 29 August 2012, XP055360642 Retrieved from the Internet: <URL:http://web.archive.org/web/20120829233 641/http :// www.verkkokauppa.com/fi/product/36431/cdmrh /Opticam-Outdoor- FI 8903W-TELE-langaton-verkkovalvontakamera> [retrieved on 2015-08-12]

## Description

### BACKGROUND:

### Field:

The aspects of the present disclosure relate to data communications. In particular, the aspects of the present disclosure relate to trigger event based response execution.

### Description of the Related Art:

Various Internet and mobile telecommunications related services have proliferated during the last decade.

While there have been efforts to simplify using these services, they still typically require several actions from the end-user and/or complex set-up operations.

Accordingly, the aspects of the present disclosure advantageously alleviate the problems described above and to introduce a solution that allows an extremely simple way to interact with e.g. various Internet and mobile telecommunications related services, for example by a single button press.

Prior art includes US 2012/0075097 A1 which discloses utilizing a security beacon device. A system for personal security includes an interface module, a storage device and a server. The interface module is configured to receive user profile information. The storage device may be coupled to the interface module for storing the user profile information. The server may be coupled to the storage device and configured to receive a user message initiated in response to a trigger event. The user message may include a security beacon device identification information, user profile information, and trigger event message. The server may be configured to process the user message to identify the security beacon device and to associate the security beacon device with the user profile information in the storage device. The user message may be analyzed at the server in order to determine the appropriate response to the trigger event associated with the received user message.

### SUMMARY:

A first aspect of the present disclosure is a system that comprises a sensor apparatus that is configured to send an identification message over a wireless communication network in response to a trigger event sensed by a sensor device comprised in the sensor apparatus. The identification message consists of a unique identifier of the sensor apparatus. The system further comprises a network server that is configured to receive the identification message, access a pre-configured action profile associated with the unique identifier in the received identification message, and cause a response action to be executed based on information in the accessed action profile.

A second aspect of the present disclosure is a method in which an identification message is sent from a sensor apparatus, over a wireless communication network, in response to a trigger event sensed by a sensor device comprised in the sensor apparatus. The identification message consists of a unique identifier of the sensor apparatus. The identification message is received at a network server. A pre-configured action profile associated with the unique identifier in the received identification message is accessed by the network server. The network server causes a response action to be executed based on information in the accessed action profile.

A third aspect of the present disclosure is a sensor apparatus that comprises a sensor device configured to sense a trigger event. The sensor apparatus further comprises a wireless transmitter configured to send an identification message over a wireless communication network to a network server in response to the trigger event sensed by sensor device. The identification message consists of a unique identifier of the sensor apparatus.

A fourth aspect of the present disclosure is a network server that comprises at least one processor and at least one memory including computer program code. The at least one memory and the computer program code are configured to, with the at least one processor, cause the network server at least to perform:
receiving an identification message sent by a sensor apparatus over a wireless communication network in response to a trigger event sensed by a sensor device comprised in the sensor apparatus, the identification message consisting of a unique identifier of the sensor apparatus;
accessing a pre-configured action profile associated with the unique identifier in the received identification message; and
causing a response action to be executed based on information in the accessed action profile.

A fifth aspect of the present disclosure is a method in which a physical non-semantic binary event is triggered. A semantic state machine is then controlled with the triggered physical non-semantic binary event.

In an embodiment of the present disclosure, the response action comprises a database transaction.

In an embodiment of the present disclosure, the response action comprises generating an action message based on information in the accessed action profile, and sending the generated action message to a network node based on the information in the accessed action profile.

In an embodiment of the present disclosure, at least one network node is configured to receive the generated action message, and in case a request is included in the received action message, to comply with the request.

In an embodiment of the present disclosure, a graphic user interface is configured to enable editing of the information in the action profile.

In an embodiment of the present disclosure, the sensor device is semiconductor based, and the sensed trigger event comprises a trigger event measurable with a semiconductor based sensor device.

In an embodiment of the present disclosure, the sensed trigger event relates to at least one of: touching the sensor apparatus, illumination in proximity of the sensor apparatus, temperature in proximity of the sensor apparatus, position of the sensor apparatus, acceleration of the sensor apparatus, compass heading of the sensor apparatus, velocity of the sensor apparatus, and motion in proximity of the sensor apparatus.

In an embodiment of the present disclosure, the action message comprises at least one of a service request, an emergency call, a toggle request, and a counter notification.

In an embodiment of the present disclosure, the sensor apparatus comprises a button, and the trigger event consists of touching and pressing the button.

In an embodiment of the present disclosure, the sensor apparatus comprises one of a computing device with a touch screen and a computing device with a non-touch screen; and the trigger event consists of one of touching an object drawn on the touch screen and clicking an object drawn on the non-touch screen, respectively.

In an embodiment of the present disclosure, the action message comprises one of a text messaging service message, an electronic mail message, and a hypertext transfer protocol -based message.

In an embodiment of the present disclosure, the wireless communication network comprises at least one of a wireless local area network and a mobile telephone network.

In an embodiment of the present disclosure, the graphic user interface is configured to be accessed via at least one of an internet browser and a mobile device application.

In an embodiment of the present disclosure, the information in the action profile comprises recipient data, content of the action message, and a type of the action message.

In an embodiment of the present disclosure, the sensor apparatus is further configured to receive a feedback message, and to provide a feedback signal in response to the received feedback message. The feedback signal may comprise at least one of a light signal and a sound signal.

In an embodiment of the present disclosure, an acknowledgement message is sent by the sensor apparatus in response to the received feedback message.

In an embodiment of the present disclosure, the information in the action profile defines the response action to be executed based on at least one of frequency, amount and lack of received identification messages.

In an embodiment of the present disclosure, the network server is further configured to receive one or more feedback messages, and the information in the action profile defines the response action to be executed based on at least one of frequency, amount and lack of received feedback messages.

It is to be understood that the aspects and embodiments of the present disclosure described above may be used in any combination with each other. Several of the aspects and embodiments may be combined together to form a further embodiment of the present disclosure. A system, a method, a sensor apparatus, or a network server which is an aspect of the present disclosure may comprise at least one of the embodiments of the present disclosure described above.

The aspects of the present disclosure allow an extremely simple and inexpensive way to interact with e.g. various Internet and mobile telecommunications related services, for example by a single button press. The aspects of the present disclosure further allows self-configuration, i.e. a user or a subscriber can predefine and edit parameters of a response action to be executed, such as contents, type and recipient of a message to be forwarded.

### BRIEF DESCRIPTION OF THE DRAWINGS:

The accompanying drawings, which are included to provide a further understanding of the aspects of the present disclosure and constitute a part of this specification, illustrate embodiments of the present disclosure and together with the description help to explain the principles of the present disclosure. In the drawings:
**Figure 1** is a block diagram illustrating a system according to an embodiment of the present disclosure;
**Figure 2** is a signaling diagram illustrating a method according to an embodiment of the present disclosure;
**Figures 3a-3b** are block diagrams illustrating apparatuses according to an embodiment of the present disclosure;
**Figure 4** is a flow diagram illustrating another method according to an embodiment of the present disclosure;
**Figure 5** is a block diagram illustrating a system according to an embodiment of the present disclosure;
**Figure 6** is a signaling diagram illustrating a method according to an embodiment of the present disclosure;
**Figures 7a-7b** are block diagrams illustrating apparatuses according to an embodiment of the present disclosure.
**Figure 8** is a block diagram illustrating a system according to an embodiment of the present disclosure;
**Figure 9** is a signaling diagram illustrating a method according to an embodiment of the present disclosure;
**Figures 10a-10b** are block diagrams illustrating apparatuses according to an embodiment of the present disclosure;
**Figure 11** is a block diagram illustrating a system according to an embodiment of the present disclosure;
**Figure 12** is a signaling diagram illustrating a method according to an embodiment of the present disclosure;
**Figures 13a-13b** are block diagrams illustrating apparatuses according to an embodiment of the present disclosure;
**Figure 14** is a block diagram illustrating a system according to an embodiment of the present disclosure;
**Figure 15** is a signaling diagram illustrating a method according to an embodiment of the present disclosure; and
**Figures 16a-16b** are block diagrams illustrating apparatuses according to an embodiment of the present disclosure.

### DETAILED DESCRIPTION OF THE PREFERRED EMBODIMENTS:

Reference will now be made in detail to the embodiments of the present disclosure, examples of which are illustrated in the accompanying drawings.

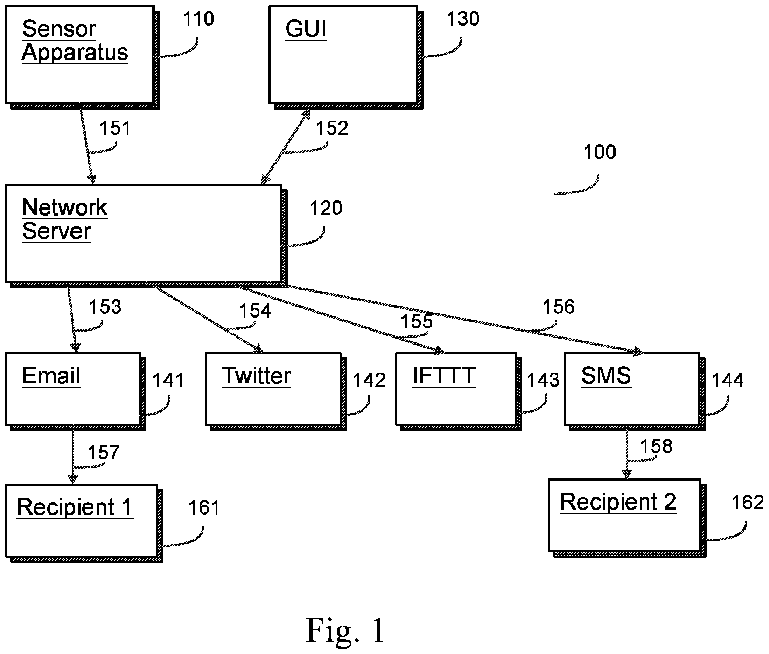

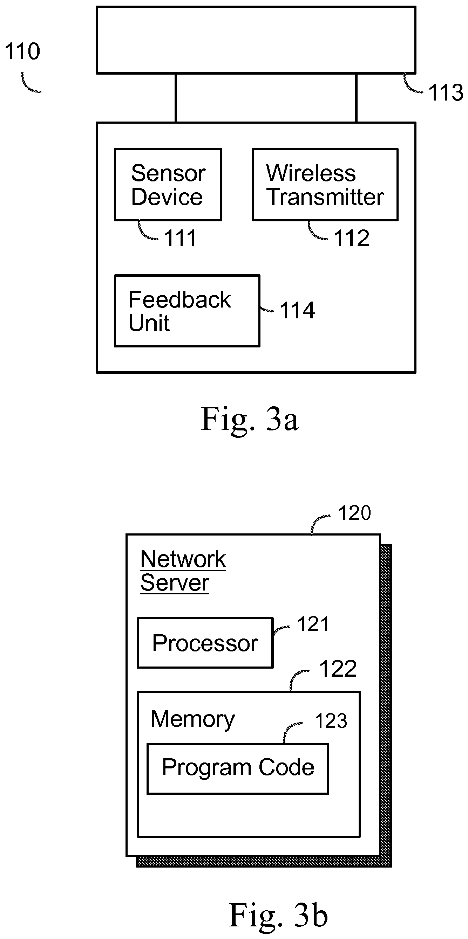

Figure 1 is a block diagram illustrating a system 100 according to an embodiment of the present disclosure. The system 100 comprises a sensor apparatus 110 that is configured to send an identification message over a wireless communication network in response to a trigger event sensed by a sensor device comprised in the sensor apparatus. As shown in more detail in Figure 3a, the sensor apparatus 110 may comprise a sensor device 111 that is configured to sense a trigger event. Furthermore, the sensor apparatus 110 may comprise a wireless transmitter 112 that is configured to send an identification message over a wireless communication network to a network server 120 in response to the trigger event sensed by sensor device 111.

Furthermore, the sensor apparatus 110 may comprise a feedback unit 114 that is configured to receive a feedback message, and to provide a feedback signal in response to the received feedback message. The feedback signal may comprise e.g. a light signal and/or a sound signal. The feedback message may be sent e.g. by the network node 141-144 receiving the action message or the recipient 161-162. The feedback message may be transmitted to the sensor apparatus 110 via the network server 120 or directly to the sensor apparatus 110. For example, in case of a request for a taxi/cab, the taxi center may send a feedback message indicating successful receipt of the request, and the sensor apparatus 110 may then provide e.g. a predetermined light and/or sound signal indicating successful receipt of the request to the person (s) who sent the request.

The identification message consists of a unique identifier of the sensor apparatus 110. The unique identifier may be e.g. a string of alphanumeric characters. The sensor device 111 may be semiconductor based, and the trigger event may comprise a trigger event that can be measured with a semiconductor based sensor device. For example, trigger event may relate to at least one of: touching the sensor apparatus 110, illumination in proximity of the sensor apparatus 110, temperature in proximity of the sensor apparatus 110, position of the sensor apparatus 110, acceleration of the sensor apparatus 110, compass heading of the sensor apparatus 110, velocity of the sensor apparatus 110, and motion in proximity of the sensor apparatus 110.

As also shown in Figure 3a, the sensor apparatus 110 may comprise a button 113. In this case, the trigger event may consist of pressing the button 113. Further in this case, the sensor device 111 may comprise e.g. a switch arrangement responsive to the button 113. Further in this case, the feedback unit 114 may be further configured to send an acknowledgement message in response to the received feedback message. For example, when the user of the sensor apparatus 110 sees/hears the feedback signal, he/she may press the button 113 again during the feedback signal, and this causes the acknowledgement message to be sent from the sensor apparatus 110 and forwarded to the network node 141-144 and/or the recipient 161-162.

Alternatively, the sensor apparatus 110 may comprise a computing device (e.g. a smart phone or a tablet computer) with a touch screen. In this case, the trigger event may consist of touching an object drawn on the touch screen. In yet another embodiment, the sensor apparatus 110 may comprise a computing device (e.g. a laptop computer or a desktop computer) with a non-touch screen. In this case, the trigger event may consist of clicking, e.g. with a mouse, an object drawn on the non-touch screen.

The system 100 further comprises a network server 120 that is configured to receive the identification message, access a pre-configured action profile, i.e. a data set, associated with the unique identifier in the received identification message, and cause a response action to be executed based on information in the accessed action profile.

The response action may comprise a database transaction. Alternatively/additionally, the response action may comprise generating an action message based on information in the accessed action profile, and sending the generated action message to a network node 141, 142, 143 and/or 144 based on the information in the accessed action profile.

As shown in more detail in Figure 3b, the network server 120 may comprise at least one processor 121 and at least one memory 122 including computer program code 123. The at least one memory 122 and the computer program code 123 are configured to, with the at least one processor 121, cause the network server 120 at least to perform:
receiving the identification message sent by the sensor apparatus 110 over a wireless communication network in response to a trigger event sensed by the sensor device 111 comprised in the sensor apparatus 110, the identification message consisting of a unique identifier of the sensor apparatus 120;
accessing a pre-configured action profile associated with the unique identifier in the received identification message; and
causing a response action to be executed based on information in the accessed action profile.

The action message may be in the form of a text messaging service message, an electronic mail message, or a hypertext transfer protocol -based message. Examples of the text messaging service message include short message service (SMS) messages and multimedia messaging service (MMS) messages. Examples of the hypertext transfer protocol -based message include Facebook posts, Twitter tweets, and a http-request to a given system.

Content wise, the action message may comprise at least one of a service request, an emergency call, a toggle request, and a counter notification. Examples of the service request include a request for a taxi/cab (e.g. an SMS to a taxi center), a request for a delivery pick-up (e.g. an SMS to a logistics company ordering system), and a pizza order (e.g. an SMS to a pizzeria). Examples of the emergency call include a help request from an elderly person (e.g. an SMS to a relative or a caretaker or a nurse). Examples of the toggle request include a request to switch a car heater on/off, a request to switch car lights on/off, a request to switch a locking system on/off, a request to switch sauna heating on/off, and IFTTT (www.ifttt.com) -related messages used to switch a given event on/off. Examples of the counter notification include a customer counter at a shop or a visitor counter at a sightseeing attraction, e.g. visitors may press the button 113 to register their visit and the operator of the sightseeing attraction may then use the accumulated visitor counter data for reports, statistics, etc.

Furthermore, the information in the action profile may define the response action to be executed based on at least one of frequency, amount and lack of received identification messages. Alternatively/additionally, the network server 120 may be further configured to receive one or more feedback messages, and the information in the action profile may define the response action to be executed based on at least one of frequency, amount and lack of received feedback messages. For example, the information in the action profile may include definitions for use in case the button 113 is not pressed by a predefined time or within a predefined time period. Alternatively/additionally, the information in the action profile may include definitions for use in case a recipient and/or a network node does not send a feedback message. In such a case, the action profile may e.g. define an alternative recipient for a re-transmission. Alternatively/additionally, the information in the action profile may include definitions for use in case a predefined amount of identification messages has been received. For example, the response action may be caused to be executed only after the predefined amount of identification messages has been received. Alternatively/additionally, the information in the action profile may include definitions for use in case a predefined amount of feedback messages has been received. Alternatively/additionally, the information in the action profile may include definitions for use in case feedback messages have been received from a predefined amount of recipients/network nodes (e.g. in a voting application).

The system 100 may further comprise one or more network nodes 141, 142, 143 or 144 which are configured to receive the generated action message, and in case a request is included in the received action message, to comply with the request. Examples of the network nodes include an email server 141, a Twitter related network node 142, such as a server, an IFTTT related network node 143, such as a server, and a short message service center (SMSC).

The system 100 may further comprise a graphic user interface 130 that is configured to enable editing of the information in the action profile. The graphic user interface 130 may be accessed e.g. via an internet browser (running e.g. on a laptop computer or a desktop computer) and/or a mobile device application (running e.g. on a smart phone or a tablet computer). The information in the action profile may comprise e.g. recipient data, content of the action message, and a type of the action message. The information in the action profile is edited by the user/owner of the sensor apparatus (110) so that he/she can e.g. self-configure the action message to his/her liking.

The wireless communication network may comprise at least one of a wireless local area network (WLAN) and a mobile telephone network. Accordingly, the connection 151 in Figure 1 comprises a wireless communication connection. The mobile telephone network may comprise e.g. a 2G, a 3G or a 4G mobile telephone network. The connections 152-157 may comprise e.g. wired or wireless Internet connections. The connection 158 may comprise e.g. a mobile telephone connection. However, it is to be understood that these connection types are merely examples, and other communication connection types may additionally/alternatively be utilized.

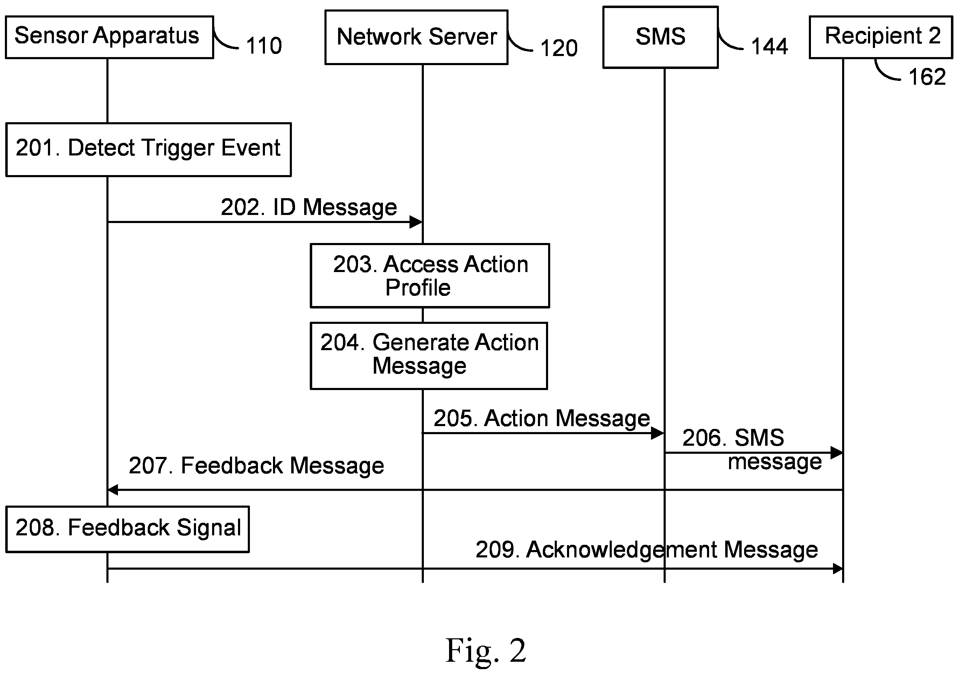

Figure 2 is a signaling diagram illustrating a method according to an embodiment of the present disclosure. In this embodiment, the response action comprises generating an action message based on information in the accessed action profile, and sending the generated action message to a network node based on the information in the accessed action profile. However, the response action is not limited to this. For example, as discussed above, the response action may additionally/alternatively comprise a database transaction. In the embodiment of Figure 2, the action message comprises an SMS message, but as discussed above, the present disclosure is not restricted to SMS messages. A trigger event is sensed by the sensor device 111 comprised in the sensor apparatus 110, step 201. In response, the identification message is sent from the sensor apparatus 110 over the wireless communication network, step 202. As discussed above, the identification message consists of a unique identifier of the sensor apparatus 110. The identification message is received at a network server 120, and a pre-configured action profile associated with the unique identifier in the received identification message is accessed by the network server 120, step 203. An action message is generated by the network server 120 based on information in the accessed action profile, step 204. The generated action message is sent to the network node 144 based on the information in the accessed action profile, step 205. The generated action message is received at the network node 144, and in case a request is included in the received action message, the network node 144 complies with the request. In the example of Figure 2, the network node 144 sends an SMS message to the recipient 162, step 206. As discussed above, the contents and the recipient address (e.g. a telephone number in this case) of the SMS message have been preconfigured by editing the action profile.

As discussed above in connection with Figure 1, e.g. the recipient 162 may then send a feedback message to the sensor apparatus 110 (e.g. via the network server 120), step 207. Then, the sensor apparatus 110 may provide a feedback signal in response to the received feedback message, step 208. The feedback signal may comprise e.g. a light signal and/or a sound signal.

As also discussed above in connection with Figure 1, an acknowledgement message may then be sent in response to the received feedback message from the sensor apparatus 110 and forwarded e.g. to the network node 144 and/or the recipient 162, step 209.

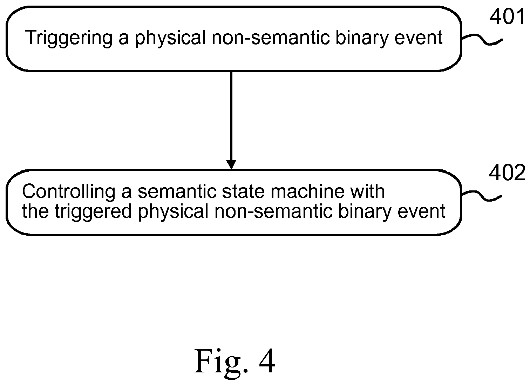

Figure 4 is a flow diagram illustrating another method according to an embodiment of the present disclosure. A physical non-semantic binary event is triggered, step 401. A semantic state machine is then controlled with the triggered physical non-semantic binary event, step 402.

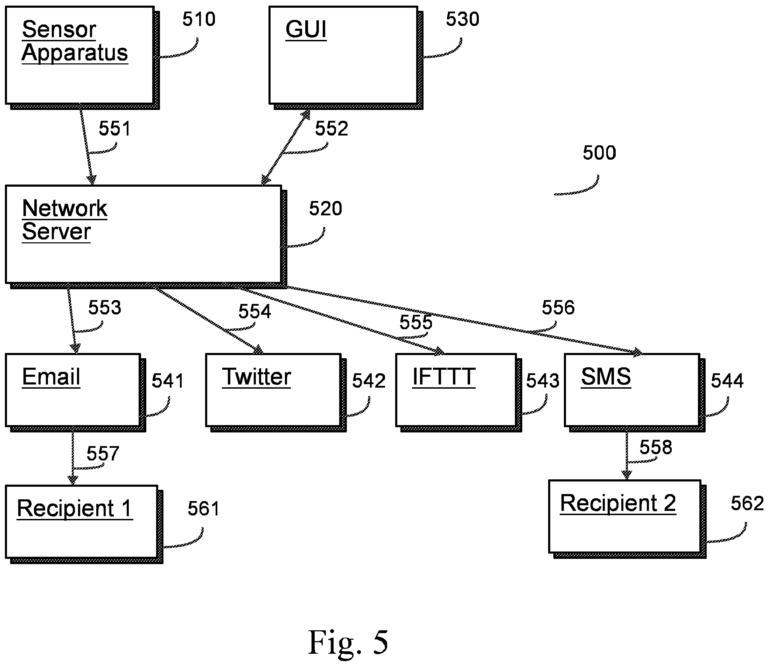

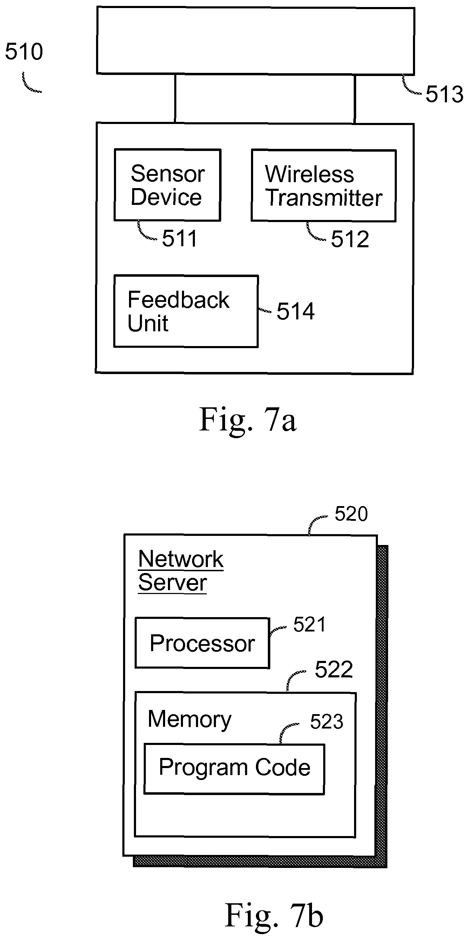

Figure 5 is a block diagram illustrating a system 500 according to an embodiment of the present disclosure. The system 500 comprises a sensor apparatus 510 that is configured to send an identification message over a wireless communication network in response to a trigger event sensed by a sensor device comprised in the sensor apparatus. As shown in more detail in Figure 7a, the sensor apparatus 510 may comprise a sensor device 511 that is configured to sense a trigger event. Furthermore, the sensor apparatus 510 may comprise a wireless transmitter 512 that is configured to send an identification message over a wireless communication network to a network server 520 in response to the trigger event sensed by sensor device 511. The sensor apparatus 510 comprises a button 513, and the trigger event consists of pressing the button 513 no longer than a predetermined time period. A cancel event consists of pressing the button 513 longer than the predetermined time period, the cancel event triggering cancelling of the response action associated with the previous trigger event. The predetermined time period may be e.g. 10 seconds. In an embodiment, the cancel event consists of pressing the button 513 at least 3-5 seconds longer than the predetermined time period. This allows a simple to use cancel option for cancelling the response action associated with the previous trigger event, for example if the button 513 was pressed by accident.

Furthermore, the sensor apparatus 510 may comprise a feedback unit 514 that is configured to receive a feedback message, and to provide a feedback signal in response to the received feedback message. The feedback signal may comprise e.g. a light signal and/or a sound signal. The feedback message may be sent e.g. by the network node 541-544 receiving the action message or the recipient 561-562. The feedback message may be transmitted to the sensor apparatus 510 via the network server 520 or directly to the sensor apparatus 510. For example, in case of a request for a taxi/cab, the taxi center may send a feedback message indicating successful receipt of the request, and the sensor apparatus 510 may then provide e.g. a predetermined light and/or sound signal indicating successful receipt of the request to the person (s) who sent the request. Furthermore, a feedback message and a corresponding feedback signal may be used to acknowledge successful cancelling of the response action associated with the previous trigger event.

The identification message consists of a unique identifier of the sensor apparatus 510. The unique identifier may be e.g. a string of alphanumeric characters.

The system 500 further comprises a network server 520 that is configured to receive the identification message, access a pre-configured action profile, i.e. a data set, associated with the unique identifier in the received identification message, and cause a response action to be executed based on information in the accessed action profile.

The response action may comprise a database transaction. Alternatively/additionally, the response action may comprise generating an action message based on information in the accessed action profile, and sending the generated action message to a network node 541, 542, 543 and/or 544 based on the information in the accessed action profile.

As shown in more detail in Figure 7b, the network server 520 may comprise at least one processor 521 and at least one memory 522 including computer program code 523. The at least one memory 522 and the computer program code 523 are configured to, with the at least one processor 521, cause the network server 520 at least to perform:
receiving the identification message sent by the sensor apparatus 510 over a wireless communication network in response to a trigger event sensed by the sensor device 511 comprised in the sensor apparatus 510, the identification message consisting of a unique identifier of the sensor apparatus 520;
accessing a pre-configured action profile associated with the unique identifier in the received identification message; and
causing a response action to be executed based on information in the accessed action profile.

As discussed above, the sensor apparatus 510 comprises a button 513, and the trigger event consists of pressing the button 513 no longer than a predetermined time period. A cancel event consists of pressing the button 513 longer than the predetermined time period.

The at least one memory 522 and the computer program code 523 are configured to, with the at least one processor 521, further cause the network server 520 to perform: causing a cancel action to be executed for cancelling the response action associated with the previous trigger event in response to detecting the cancel event.

The action message may be in the form of a text messaging service message, an electronic mail message, or a hypertext transfer protocol -based message. Examples of the text messaging service message include short message service (SMS) messages and multimedia messaging service (MMS) messages. Examples of the hypertext transfer protocol -based message include Facebook posts, Twitter tweets, and a http-request to a given system.

Content wise, the action message may comprise at least one of a service request, an emergency call, a toggle request, and a counter notification. Examples of the service request include a request for a taxi/cab (e.g. an SMS to a taxi center), a request for a delivery pick-up (e.g. an SMS to a logistics company ordering system), and a pizza order (e.g. an SMS to a pizzeria). Examples of the emergency call include a help request from an elderly person (e.g. an SMS to a relative or a caretaker or a nurse). Examples of the toggle request include a request to switch a car heater on/off, a request to switch car lights on/off, a request to switch a locking system on/off, a request to switch sauna heating on/off, and IFTTT (www.ifttt.com) -related messages used to switch a given event on/off. Examples of the counter notification include a customer counter at a shop or a visitor counter at a sightseeing attraction, e.g. visitors may press the button 513 to register their visit and the operator of the sightseeing attraction may then use the accumulated visitor counter data for reports, statistics, etc.

Furthermore, the information in the action profile may define the response action to be executed based on at least one of frequency, amount and lack of received identification messages. Alternatively/additionally, the network server 520 may be further configured to receive one or more feedback messages, and the information in the action profile may define the response action to be executed based on at least one of frequency, amount and lack of received feedback messages. For example, the information in the action profile may include definitions for use in case the button 513 is not pressed by a predefined time or within a predefined time period. Alternatively/additionally, the information in the action profile may include definitions for use in case a recipient and/or a network node does not send a feedback message. In such a case, the action profile may e.g. define an alternative recipient for a re-transmission. Alternatively/additionally, the information in the action profile may include definitions for use in case a predefined amount of identification messages has been received. For example, the response action may be caused to be executed only after the predefined amount of identification messages has been received. Alternatively/additionally, the information in the action profile may include definitions for use in case a predefined amount of feedback messages has been received. Alternatively/additionally, the information in the action profile may include definitions for use in case feedback messages have been received from a predefined amount of recipients/network nodes (e.g. in a voting application).

The system 500 may further comprise one or more network nodes 541, 542, 543 or 544 which are configured to receive the generated action message, and in case a request is included in the received action message, to comply with the request. Examples of the network nodes include an email server 541, a Twitter related network node 542, such as a server, an IFTTT related network node 543, such as a server, and a short message service center (SMSC).

The system 500 may further comprise a graphic user interface 530 that is configured to enable editing of the information in the action profile. The graphic user interface 530 may be accessed e.g. via an internet browser (running e.g. on a laptop computer or a desktop computer) and/or a mobile device application (running e.g. on a smart phone or a tablet computer). The information in the action profile may comprise e.g. recipient data, content of the action message, and a type of the action message. The information in the action profile is edited by the user/owner of the sensor apparatus (510) so that he/she can e.g. self-configure the action message to his/her liking.

The wireless communication network may comprise at least one of a wireless local area network (WLAN) and a mobile telephone network. Accordingly, the connection 551 in Figure 5 comprises a wireless communication connection. The mobile telephone network may comprise e.g. a 2G, a 3G or a 4G mobile telephone network. The connections 552-557 may comprise e.g. wired or wireless Internet connections. The connection 558 may comprise e.g. a mobile telephone connection. However, it is to be understood that these connection types are merely examples, and other communication connection types may additionally/alternatively be utilized.

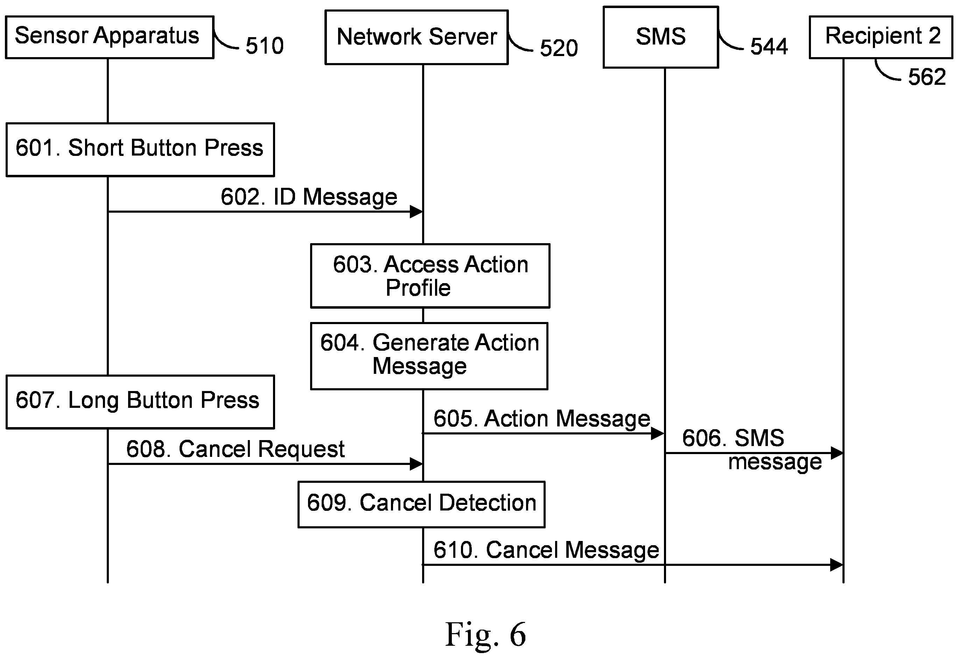

Figure 6 is a signaling diagram illustrating a method according to an embodiment of the present disclosure. In this embodiment, the response action comprises generating an action message based on information in the accessed action profile, and sending the generated action message to a network node based on the information in the accessed action profile. However, the response action is not limited to this. For example, as discussed above, the response action may additionally/alternatively comprise a database transaction. In the embodiment of Figure 6, the action message comprises an SMS message, but as discussed above, the present disclosure is not restricted to SMS messages. A trigger event is sensed by the sensor device 511 comprised in the sensor apparatus 510, step 601. Herein, the sensor apparatus 510 comprises a button 513, and the trigger event consists of pressing the button 513 no longer than a predetermined time period. Herein, the sensor device 511 may comprise e.g. a switch arrangement responsive to the button 513. In response, the identification message is sent from the sensor apparatus 510 over the wireless communication network, step 602. As discussed above, the identification message consists of a unique identifier of the sensor apparatus 510. The identification message is received at a network server 520, and a pre-configured action profile associated with the unique identifier in the received identification message is accessed by the network server 520, step 603. An action message is generated by the network server 520 based on information in the accessed action profile, step 604. The generated action message is sent to the network node 544 based on the information in the accessed action profile, step 605. The generated action message is received at the network node 544, and in case a request is included in the received action message, the network node 544 complies with the request. In the example of Figure 6, the network node 544 sends an SMS message to the recipient 562, step 606. As discussed above, the contents and the recipient address (e.g. a telephone number in this case) of the SMS message have been preconfigured by editing the action profile.

A cancel event consists of pressing the button 513 longer than the predetermined time period, the cancel event causing a cancel action to be executed for cancelling the response action associated with the previous trigger event. The predetermined time period may be e.g. 10 seconds. Accordingly, at step 607, the button 513 is pressed longer than the predetermined time period to trigger cancelling of the request of steps 605-606. At step 608, a cancel request message or signal is sent from the sensor apparatus 510 over the wireless communication network to the network server 520. The cancel event is detected at the network server 520, step 609. Then, a cancel action is caused to be executed. In the example of Figure 6, this is performed by sending a cancel message requesting cancellation of the request of steps 605-606 from the network server 520, step 610. Alternatively, if the longer than the predetermined time period button press is detected before sending the action message to the network node 544 at step 605, the step 605 of sending the action message may be cancelled (in which case step 606 will not be performed either).

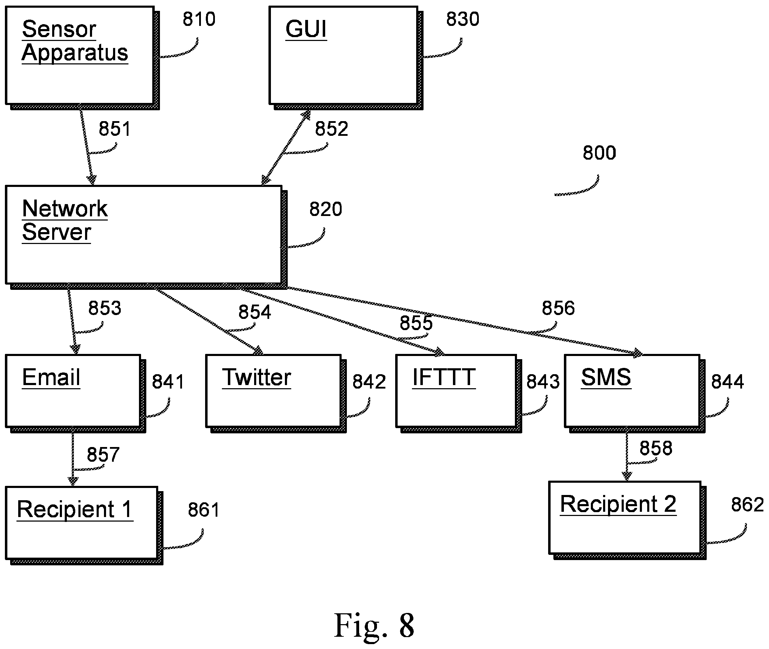

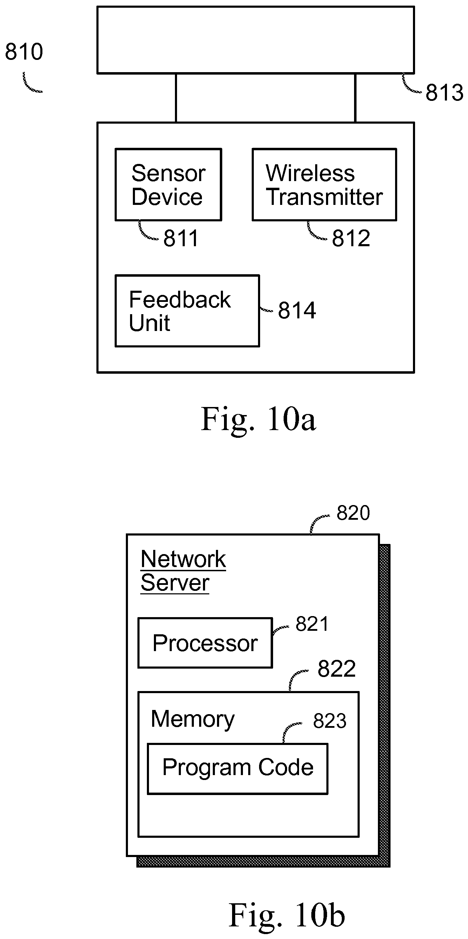

Figure 8 is a block diagram illustrating a system 800 according to an embodiment of the present disclosure. The system 800 comprises a sensor apparatus 810 that is configured to send an identification message over a wireless communication network in response to a trigger event sensed by a sensor device comprised in the sensor apparatus. As shown in more detail in Figure 10a, the sensor apparatus 810 may comprise a sensor device 811 that is configured to sense a trigger event. Furthermore, the sensor apparatus 810 may comprise a wireless transmitter 812 that is configured to send an identification message over a wireless communication network to a network server 820 in response to the trigger event sensed by sensor device 811. The sensor apparatus 810 comprises a button 813, and the trigger event consists of pressing the button 813. The sensor apparatus is further configured to be switched on in response to the pressing of the button. The sensor apparatus 810 may be further configured to be automatically switched off after a predetermined time period. The predetermined time period may be e.g. one minute. This allows automatic power on/off in the sensor apparatus 810, thereby allowing e.g. saving power and preventing electromagnetic radiation in the sensor apparatus 810.

Furthermore, the sensor apparatus 810 may comprise a feedback unit 814 that is configured to receive a feedback message, and to provide a feedback signal in response to the received feedback message. The feedback signal may comprise e.g. a light signal and/or a sound signal. The feedback message may be sent e.g. by the network node 841-844 receiving the action message or the recipient 861-862. The feedback message may be transmitted to the sensor apparatus 810 via the network server 820 or directly to the sensor apparatus 810. For example, in case of a request for a taxi/cab, the taxi center may send a feedback message indicating successful receipt of the request, and the sensor apparatus 810 may then provide e.g. a predetermined light and/or sound signal indicating successful receipt of the request to the person (s) who sent the request.

The identification message consists of a unique identifier of the sensor apparatus 810. The unique identifier may be e.g. a string of alphanumeric characters.

The system 800 further comprises a network server 820 that is configured to receive the identification message, access a pre-configured action profile, i.e. a data set, associated with the unique identifier in the received identification message, and cause a response action to be executed based on information in the accessed action profile.

The response action may comprise a database transaction. Alternatively/additionally, the response action may comprise generating an action message based on information in the accessed action profile, and sending the generated action message to a network node 841, 842, 843 and/or 844 based on the information in the accessed action profile.

As shown in more detail in Figure 10b, the network server 820 may comprise at least one processor 821 and at least one memory 822 including computer program code 823. The at least one memory 822 and the computer program code 823 are configured to, with the at least one processor 821, cause the network server 820 at least to perform:
receiving the identification message sent by the sensor apparatus 810 over a wireless communication network in response to a trigger event sensed by the sensor device 811 comprised in the sensor apparatus 810, the identification message consisting of a unique identifier of the sensor apparatus 820;
accessing a pre-configured action profile associated with the unique identifier in the received identification message; and
causing a response action to be executed based on information in the accessed action profile.

The action message may be in the form of a text messaging service message, an electronic mail message, or a hypertext transfer protocol -based message. Examples of the text messaging service message include short message service (SMS) messages and multimedia messaging service (MMS) messages. Examples of the hypertext transfer protocol -based message include Facebook posts, Twitter tweets, and a http-request to a given system.

Content wise, the action message may comprise at least one of a service request, an emergency call, a toggle request, and a counter notification. Examples of the service request include a request for a taxi/cab (e.g. an SMS to a taxi center), a request for a delivery pick-up (e.g. an SMS to a logistics company ordering system), and a pizza order (e.g. an SMS to a pizzeria). Examples of the emergency call include a help request from an elderly person (e.g. an SMS to a relative or a caretaker or a nurse). Examples of the toggle request include a request to switch a car heater on/off, a request to switch car lights on/off, a request to switch a locking system on/off, a request to switch sauna heating on/off, and IFTTT (www.ifttt.com) -related messages used to switch a given event on/off. Examples of the counter notification include a customer counter at a shop or a visitor counter at a sightseeing attraction, e.g. visitors may press the button 813 to register their visit and the operator of the sightseeing attraction may then use the accumulated visitor counter data for reports, statistics, etc.

Furthermore, the information in the action profile may define the response action to be executed based on at least one of frequency, amount and lack of received identification messages. Alternatively/additionally, the network server 820 may be further configured to receive one or more feedback messages, and the information in the action profile may define the response action to be executed based on at least one of frequency, amount and lack of received feedback messages. For example, the information in the action profile may include definitions for use in case the button 813 is not pressed by a predefined time or within a predefined time period. Alternatively/additionally, the information in the action profile may include definitions for use in case a recipient and/or a network node does not send a feedback message. In such a case, the action profile may e.g. define an alternative recipient for a re-transmission. Alternatively/additionally, the information in the action profile may include definitions for use in case a predefined amount of identification messages has been received. For example, the response action may be caused to be executed only after the predefined amount of identification messages has been received. Alternatively/additionally, the information in the action profile may include definitions for use in case a predefined amount of feedback messages has been received. Alternatively/additionally, the information in the action profile may include definitions for use in case feedback messages have been received from a predefined amount of recipients/network nodes (e.g. in a voting application).

The system 800 may further comprise one or more network nodes 841, 842, 843 or 844 which are configured to receive the generated action message, and in case a request is included in the received action message, to comply with the request. Examples of the network nodes include an email server 841, a Twitter related network node 842, such as a server, an IFTTT related network node 843, such as a server, and a short message service center (SMSC).

The system 800 may further comprise a graphic user interface 830 that is configured to enable editing of the information in the action profile. The graphic user interface 830 may be accessed e.g. via an internet browser (running e.g. on a laptop computer or a desktop computer) and/or a mobile device application (running e.g. on a smart phone or a tablet computer). The information in the action profile may comprise e.g. recipient data, content of the action message, and a type of the action message. The information in the action profile is edited by the user/owner of the sensor apparatus (810) so that he/she can e.g. self-configure the action message to his/her liking.

The wireless communication network may comprise at least one of a wireless local area network (WLAN) and a mobile telephone network. Accordingly, the connection 851 in Figure 8 comprises a wireless communication connection. The mobile telephone network may comprise e.g. a 2G, a 3G or a 4G mobile telephone network. The connections 852-857 may comprise e.g. wired or wireless Internet connections. The connection 858 may comprise e.g. a mobile telephone connection. However, it is to be understood that these connection types are merely examples, and other communication connection types may additionally/alternatively be utilized.

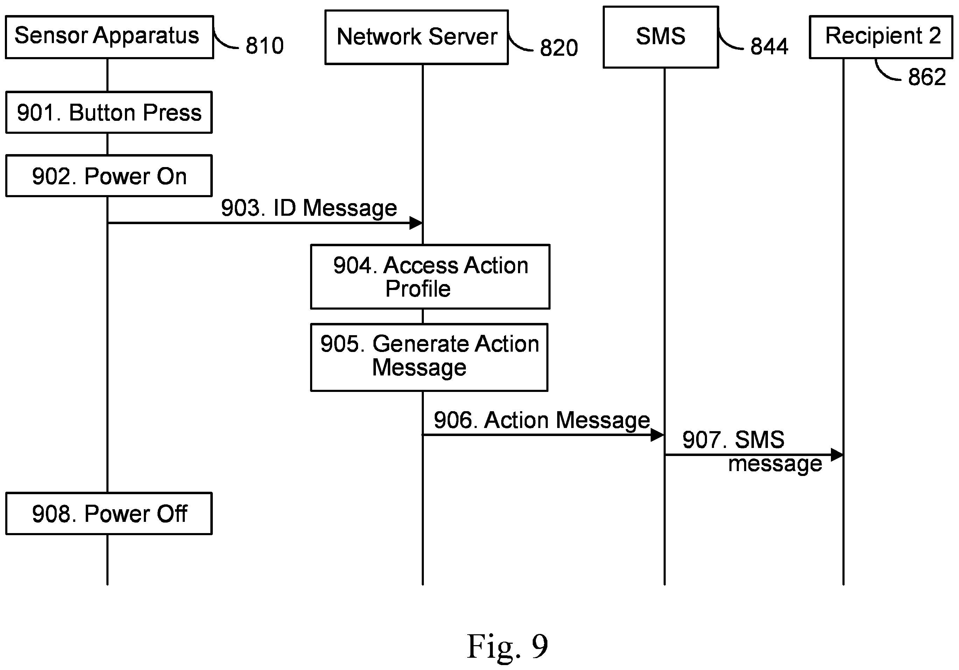

Figure 9 is a signaling diagram illustrating a method according to an embodiment of the present disclosure. In this embodiment, the response action comprises generating an action message based on information in the accessed action profile, and sending the generated action message to a network node based on the information in the accessed action profile. However, the response action is not limited to this. For example, as discussed above, the response action may additionally/alternatively comprise a database transaction. In the embodiment of Figure 9, the action message comprises an SMS message, but as discussed above, the present disclosure is not restricted to SMS messages. A trigger event is sensed by the sensor device 811 comprised in the sensor apparatus 810, step 901. Herein, the sensor apparatus 810 comprises a button 813, and the trigger event consists of pressing the button 813. Herein, the sensor device 811 may comprise e.g. a switch arrangement responsive to the button 813. In response to pressing the button 813 at step 901, the sensor apparatus is switched on, step 902. Further in response to pressing the button 813 at step 901, the identification message is sent from the sensor apparatus 810 over the wireless communication network, step 903. As discussed above, the identification message consists of a unique identifier of the sensor apparatus 810. The identification message is received at a network server 820, and a pre-configured action profile associated with the unique identifier in the received identification message is accessed by the network server 820, step 904. An action message is generated by the network server 820 based on information in the accessed action profile, step 905. The generated action message is sent to the network node 844 based on the information in the accessed action profile, step 906. The generated action message is received at the network node 844, and in case a request is included in the received action message, the network node 844 complies with the request. In the example of Figure 9, the network node 844 sends an SMS message to the recipient 862, step 907. As discussed above, the contents and the recipient address (e.g. a telephone number in this case) of the SMS message have been preconfigured by editing the action profile. At step 908, the sensor apparatus 810 may be automatically switched off after a predetermined time period. The predetermined time period may be determined from the power on step 902. Alternatively, an acknowledgement message or signal may be sent from the network server 820 to the sensor apparatus 810 confirming successful receipt of the ID Message at step 903. In such a case, the predetermined time period may be determined e.g. from receipt of the acknowledgement message or signal at the sensor apparatus 810.

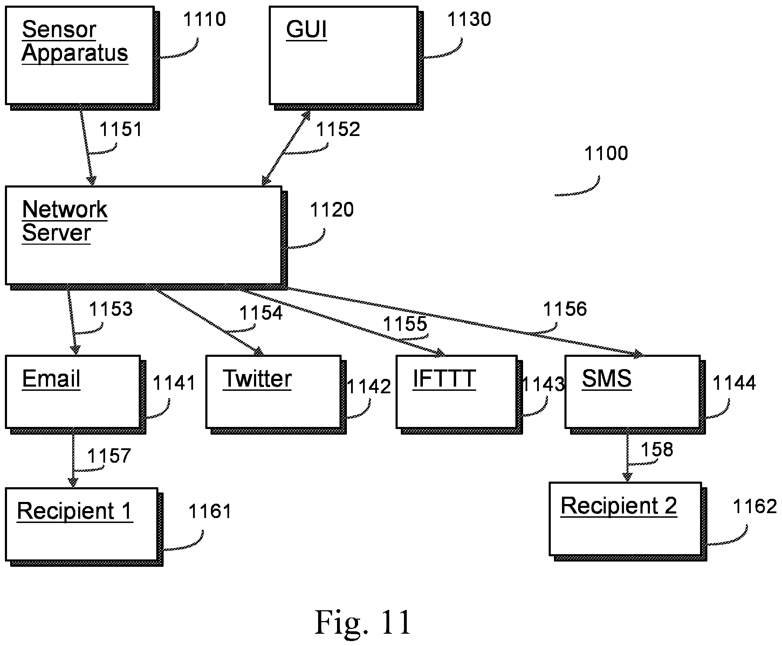

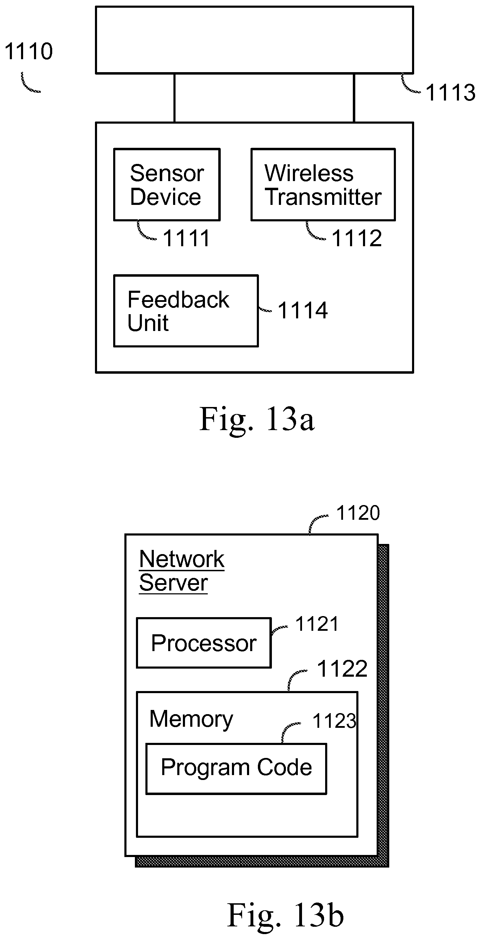

Figure 11 is a block diagram illustrating a system 1100 according to an embodiment of the present disclosure. The system 1100 comprises a sensor apparatus 1110 that is configured to send an identification message over a wireless communication network in response to a trigger event sensed by a sensor device comprised in the sensor apparatus. As shown in more detail in Figure 13a, the sensor apparatus 1110 may comprise a sensor device 1111 that is configured to sense a trigger event. Furthermore, the sensor apparatus 1110 may comprise a wireless transmitter 1112 that is configured to send an identification message over a wireless communication network to a network server 1120 in response to the trigger event sensed by sensor device 1111. The sensor apparatus 1110 comprises a button 1113, and the trigger event consists of pressing the button 1113. The sensor apparatus 1110 is further configured to keep the button 1113 pressed down until instructed by the network server 1120 to return the button 1113 to its initial position. For example, the sensor apparatus 1110 may be instructed by the network server 1120 to return the button 1113 to its initial position in response to the network server 1120 successfully receiving the identification message. This allows prevention of unintentional button presses.

Furthermore, the sensor apparatus 1110 may comprise a feedback unit 1114 that is configured to receive a feedback message, and to provide a feedback signal in response to the received feedback message. The feedback signal may comprise e.g. a light signal and/or a sound signal. The feedback message may be sent e.g. by the network node 1141-1144 receiving the action message or the recipient 1161-1162. The feedback message may be transmitted to the sensor apparatus 1110 via the network server 1120 or directly to the sensor apparatus 1110. For example, in case of a request for a taxi/cab, the taxi center may send a feedback message indicating successful receipt of the request, and the sensor apparatus 1110 may then provide e.g. a predetermined light and/or sound signal indicating successful receipt of the request to the person(s) who sent the request.

The identification message consists of a unique identifier of the sensor apparatus 1110. The unique identifier may be e.g. a string of alphanumeric characters.

The system 1100 further comprises a network server 1120 that is configured to receive the identification message, access a pre-configured action profile, i.e. a data set, associated with the unique identifier in the received identification message, and cause a response action to be executed based on information in the accessed action profile.

The response action may comprise a database transaction. Alternatively/additionally, the response action may comprise generating an action message based on information in the accessed action profile, and sending the generated action message to a network node 1141, 1142, 1143 and/or 1144 based on the information in the accessed action profile.

As shown in more detail in Figure 13b, the network server 1120 may comprise at least one processor 1121 and at least one memory 1122 including computer program code 1123. The at least one memory 1122 and the computer program code 1123 are configured to, with the at least one processor 1121, cause the network server 1120 at least to perform:
receiving the identification message sent by the sensor apparatus 1110 over a wireless communication network in response to a trigger event sensed by the sensor device 1111 comprised in the sensor apparatus 1110, the identification message consisting of a unique identifier of the sensor apparatus 1120;
accessing a pre-configured action profile associated with the unique identifier in the received identification message; and
causing a response action to be executed based on information in the accessed action profile.

The action message may be in the form of a text messaging service message, an electronic mail message, or a hypertext transfer protocol -based message. Examples of the text messaging service message include short message service (SMS) messages and multimedia messaging service (MMS) messages. Examples of the hypertext transfer protocol -based message include Facebook posts, Twitter tweets, and a http-request to a given system.

Content wise, the action message may comprise at least one of a service request, an emergency call, a toggle request, and a counter notification. Examples of the service request include a request for a taxi/cab (e.g. an SMS to a taxi center), a request for a delivery pick-up (e.g. an SMS to a logistics company ordering system), and a pizza order (e.g. an SMS to a pizzeria). Examples of the emergency call include a help request from an elderly person (e.g. an SMS to a relative or a caretaker or a nurse). Examples of the toggle request include a request to switch a car heater on/off, a request to switch car lights on/off, a request to switch a locking system on/off, a request to switch sauna heating on/off, and IFTTT (www.ifttt.com) -related messages used to switch a given event on/off. Examples of the counter notification include a customer counter at a shop or a visitor counter at a sightseeing attraction, e.g. visitors may press the button 1113 to register their visit and the operator of the sightseeing attraction may then use the accumulated visitor counter data for reports, statistics, etc.

Furthermore, the information in the action profile may define the response action to be executed based on at least one of frequency, amount and lack of received identification messages. Alternatively/additionally, the network server 1120 may be further configured to receive one or more feedback messages, and the information in the action profile may define the response action to be executed based on at least one of frequency, amount and lack of received feedback messages. For example, the information in the action profile may include definitions for use in case the button 1113 is not pressed by a predefined time or within a predefined time period. Alternatively/additionally, the information in the action profile may include definitions for use in case a recipient and/or a network node does not send a feedback message. In such a case, the action profile may e.g. define an alternative recipient for a re-transmission. Alternatively/additionally, the information in the action profile may include definitions for use in case a predefined amount of identification messages has been received. For example, the response action may be caused to be executed only after the predefined amount of identification messages has been received. Alternatively/additionally, the information in the action profile may include definitions for use in case a predefined amount of feedback messages has been received. Alternatively/additionally, the information in the action profile may include definitions for use in case feedback messages have been received from a predefined amount of recipients/network nodes (e.g. in a voting application).

The system 1100 may further comprise one or more network nodes 1141, 1142, 1143 or 1144 which are configured to receive the generated action message, and in case a request is included in the received action message, to comply with the request. Examples of the network nodes include an email server 1141, a Twitter related network node 1142, such as a server, an IFTTT related network node 1143, such as a server, and a short message service center (SMSC).

The system 1100 may further comprise a graphic user interface 130 that is configured to enable editing of the information in the action profile. The graphic user interface 1130 may be accessed e.g. via an internet browser (running e.g. on a laptop computer or a desktop computer) and/or a mobile device application (running e.g. on a smart phone or a tablet computer). The information in the action profile may comprise e.g. recipient data, content of the action message, and a type of the action message. The information in the action profile is edited by the user/owner of the sensor apparatus (1110) so that he/she can e.g. self-configure the action message to his/her liking.

The wireless communication network may comprise at least one of a wireless local area network (WLAN) and a mobile telephone network. Accordingly, the connection 1151 in Figure 11 comprises a wireless communication connection. The mobile telephone network may comprise e.g. a 2G, a 3G or a 4G mobile telephone network. The connections 1152-1157 may comprise e.g. wired or wireless Internet connections. The connection 1158 may comprise e.g. a mobile telephone connection. However, it is to be understood that these connection types are merely examples, and other communication connection types may additionally/alternatively be utilized.

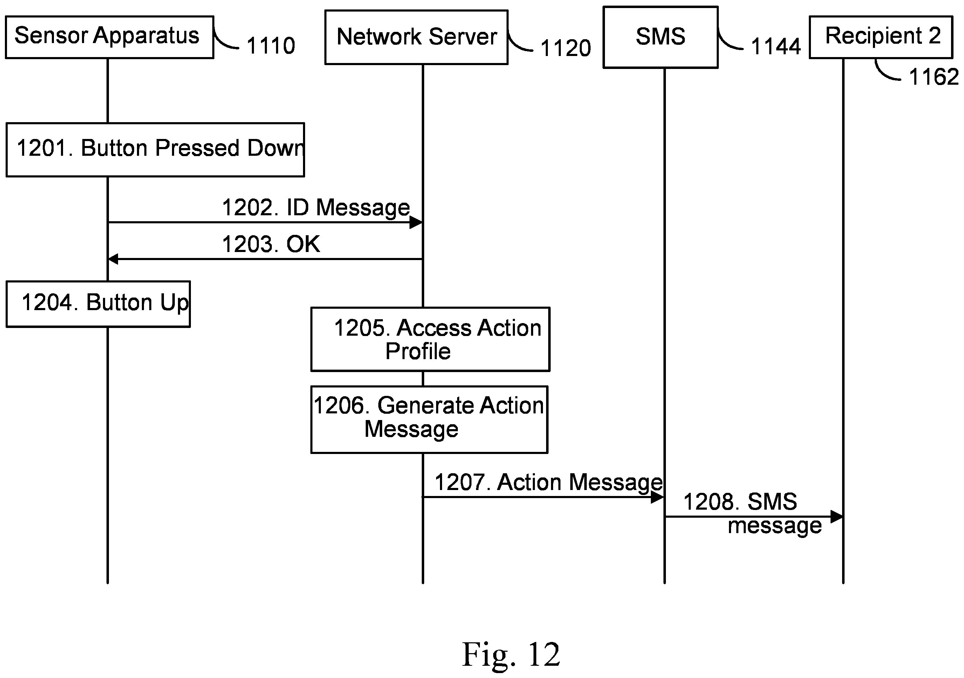

Figure 12 is a signaling diagram illustrating a method according to an embodiment of the present disclosure. In this embodiment, the response action comprises generating an action message based on information in the accessed action profile, and sending the generated action message to a network node based on the information in the accessed action profile. However, the response action is not limited to this. For example, as discussed above, the response action may additionally/alternatively comprise a database transaction. In the embodiment of Figure 12, the action message comprises an SMS message, but as discussed above, the present disclosure is not restricted to SMS messages. A trigger event is sensed by the sensor device 1111 comprised in the sensor apparatus 1110, step 1201. Herein, the sensor apparatus 1110 comprises a button 1113, and the trigger event consists of pressing the button 1113 down. Herein, the sensor device 1111 may comprise e.g. a switch arrangement responsive to the button 1113. In response to pressing the button 1113 at step 1201, the identification message is sent from the sensor apparatus 1110 over the wireless communication network, step 1202. The button or button cap 1113 is kept in its pressed down position for the time being. As discussed above, the identification message consists of a unique identifier of the sensor apparatus 1110. In the example of Figure 12, in response to the network server 1120 successfully receiving the identification message, the network server 1120 instructs the sensor apparatus 1110 to return the button 1113 to its initial position, step 1203. In response, the button or button cap 1113 is released or allowed back to its initial up position, step 1204. It is to be noted that steps 1203-1204 may alternatively be performed later, e.g. after step 1206 or later. Furthermore, step 1203 may be performed by the network server 1120 pushing the instruction to return the button 1113 to its initial position to the sensor apparatus 1110, or by the sensor apparatus 1110 polling the network server 1120 for the instruction to return the button 113 to its initial position.

The identification message is received at a network server 1120, and a pre-configured action profile associated with the unique identifier in the received identification message is accessed by the network server 1120, step 1205. An action message is generated by the network server 1120 based on information in the accessed action profile, step 1206. The generated action message is sent to the network node 1144 based on the information in the accessed action profile, step 1207. The generated action message is received at the network node 1144, and in case a request is included in the received action message, the network node 1144 complies with the request. In the example of Figure 12, the network node 1144 sends an SMS message to the recipient 1162, step 1208. As discussed above, the contents and the recipient address (e.g. a telephone number in this case) of the SMS message have been preconfigured by editing the action profile.

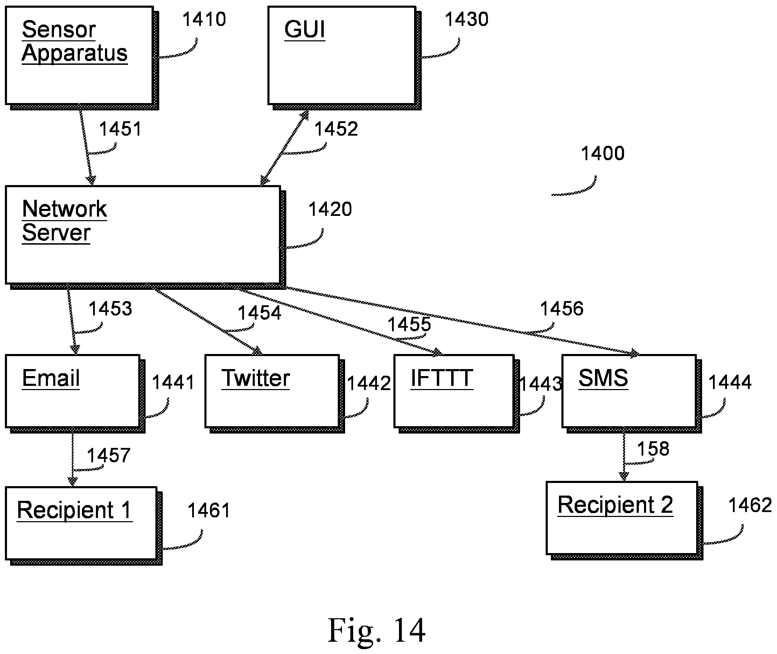

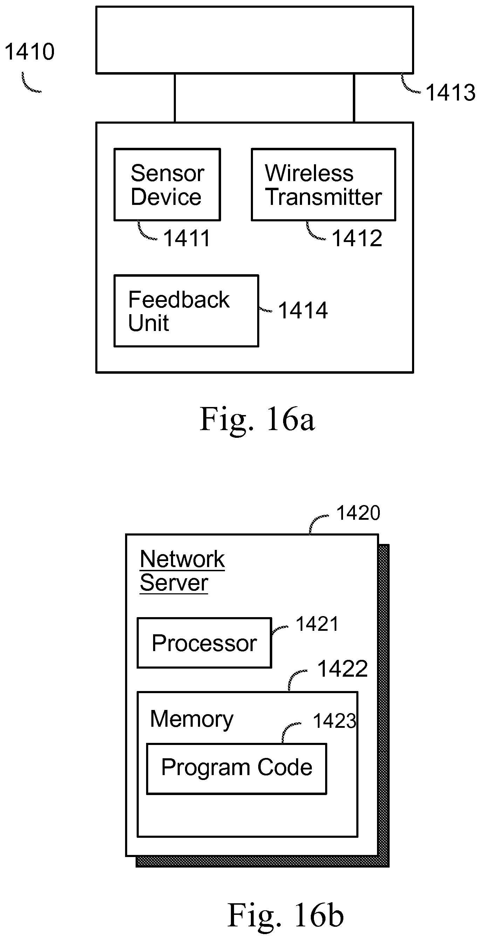

Figure 14 is a block diagram illustrating a system 1400 according to an embodiment of the present disclosure. The system 1400 comprises a sensor apparatus 1410 that is configured to send an identification message over a wireless communication network in response to a trigger event sensed by a sensor device comprised in the sensor apparatus. As shown in more detail in Figure 16a, the sensor apparatus 1410 may comprise a sensor device 1411 that is configured to sense a trigger event. Furthermore, the sensor apparatus 1410 may comprise a wireless transmitter 1412 that is configured to send an identification message over a wireless communication network to a network server 1420 in response to the trigger event sensed by sensor device 1411.

Furthermore, the sensor apparatus 1410 may comprise a feedback unit 1414 that is configured to receive a feedback message, and to provide a feedback signal in response to the received feedback message. The feedback signal may comprise e.g. a light signal and/or a sound signal. The feedback message may be sent e.g. by the network node 1441-1444 receiving the action message or the recipient 1461-1462. The feedback message may be transmitted to the sensor apparatus 1410 via the network server 1420 or directly to the sensor apparatus 1410. For example, in case of a request for a taxi/cab, the taxi center may send a feedback message indicating successful receipt of the request, and the sensor apparatus 1410 may then provide e.g. a predetermined light and/or sound signal indicating successful receipt of the request to the person(s) who sent the request.

The sensor apparatus 1410 is further configured to be paired to a subscriber account before first use. The pairing may comprise entering to subscriber account associated data a unique device code associated with the sensor apparatus 1410. The pairing may further comprise entering to subscriber account associated data a description of a light signal sequence displayed by the sensor apparatus 1410. The sensor apparatus 1410 may utilize e.g. the feedback unit 1414 for displaying the light signal sequence. The pairing allows secure initialization of the sensor apparatus 1410.

The identification message consists of a unique identifier of the sensor apparatus 1410. The unique identifier may be e.g. a string of alphanumeric characters. The sensor device 1411 may be semiconductor based, and the trigger event may comprise a trigger event that can be measured with a semiconductor based sensor device. For example, trigger event may relate to at least one of: touching the sensor apparatus 1410, illumination in proximity of the sensor apparatus 1410, temperature in proximity of the sensor apparatus 1410, position of the sensor apparatus 1410, acceleration of the sensor apparatus 1410, compass heading of the sensor apparatus 1410, velocity of the sensor apparatus 1410, and motion in proximity of the sensor apparatus 1410.

As also shown in Figure 16a, the sensor apparatus 1410 may comprise a button 1413. In this case, the trigger event may consist of pressing the button 1413. Further in this case, the sensor device 1411 may comprise e.g. a switch arrangement responsive to the button 1413.

Alternatively, the sensor apparatus 1410 may comprise a computing device (e.g. a smart phone or a tablet computer) with a touch screen. In this case, the trigger event may consist of touching an object drawn on the touch screen. In yet another embodiment, the sensor apparatus 1410 may comprise a computing device (e.g. a laptop computer or a desktop computer) with a non-touch screen. In this case, the trigger event may consist of clicking, e.g. with a mouse, an object drawn on the non-touch screen.

The system 1400 further comprises a network server 1420 that is configured to receive the identification message, access a pre-configured action profile, i.e. a data set, associated with the unique identifier in the received identification message, and cause a response action to be executed based on information in the accessed action profile.

The response action may comprise a database transaction. Alternatively/additionally, the response action may comprise generating an action message based on information in the accessed action profile, and sending the generated action message to a network node 1441, 1442, 1443 and/or 1444 based on the information in the accessed action profile.

As shown in more detail in Figure 16b, the network server 1420 may comprise at least one processor 1421 and at least one memory 1422 including computer program code 1423. The at least one memory 1422 and the computer program code 1423 are configured to, with the at least one processor 1421, cause the network server 1420 at least to perform:
receiving the identification message sent by the sensor apparatus 1410 over a wireless communication network in response to a trigger event sensed by the sensor device 1411 comprised in the sensor apparatus 1410, the identification message consisting of a unique identifier of the sensor apparatus 1420;
accessing a pre-configured action profile associated with the unique identifier in the received identification message; and
causing a response action to be executed based on information in the accessed action profile.

The action message may be in the form of a text messaging service message, an electronic mail message, or a hypertext transfer protocol -based message. Examples of the text messaging service message include short message service (SMS) messages and multimedia messaging service (MMS) messages. Examples of the hypertext transfer protocol -based message include Facebook posts, Twitter tweets, and a http-request to a given system.

Content wise, the action message may comprise at least one of a service request, an emergency call, a toggle request, and a counter notification. Examples of the service request include a request for a taxi/cab (e.g. an SMS to a taxi center), a request for a delivery pick-up (e.g. an SMS to a logistics company ordering system), and a pizza order (e.g. an SMS to a pizzeria). Examples of the emergency call include a help request from an elderly person (e.g. an SMS to a relative or a caretaker or a nurse). Examples of the toggle request include a request to switch a car heater on/off, a request to switch car lights on/off, a request to switch a locking system on/off, a request to switch sauna heating on/off, and IFTTT (www.ifttt.com) -related messages used to switch a given event on/off. Examples of the counter notification include a customer counter at a shop or a visitor counter at a sightseeing attraction, e.g. visitors may press the button 1413 to register their visit and the operator of the sightseeing attraction may then use the accumulated visitor counter data for reports, statistics, etc.

Furthermore, the information in the action profile may define the response action to be executed based on at least one of frequency, amount and lack of received identification messages. Alternatively/additionally, the network server 1420 may be further configured to receive one or more feedback messages, and the information in the action profile may define the response action to be executed based on at least one of frequency, amount and lack of received feedback messages. For example, the information in the action profile may include definitions for use in case the button 1413 is not pressed by a predefined time or within a predefined time period. Alternatively/additionally, the information in the action profile may include definitions for use in case a recipient and/or a network node does not send a feedback message. In such a case, the action profile may e.g. define an alternative recipient for a re-transmission. Alternatively/additionally, the information in the action profile may include definitions for use in case a predefined amount of identification messages has been received. For example, the response action may be caused to be executed only after the predefined amount of identification messages has been received. Alternatively/additionally, the information in the action profile may include definitions for use in case a predefined amount of feedback messages has been received. Alternatively/additionally, the information in the action profile may include definitions for use in case feedback messages have been received from a predefined amount of recipients/network nodes (e.g. in a voting application).

The system 1400 may further comprise one or more network nodes 1441, 1442, 1443 or 1444 which are configured to receive the generated action message, and in case a request is included in the received action message, to comply with the request. Examples of the network nodes include an email server 1441, a Twitter related network node 1442, such as a server, an IFTTT related network node 1443, such as a server, and a short message service center (SMSC).

The system 1400 may further comprise a graphic user interface 1430 that is configured to enable editing of the information in the action profile. The graphic user interface 1430 may be accessed e.g. via an internet browser (running e.g. on a laptop computer or a desktop computer) and/or a mobile device application (running e.g. on a smart phone or a tablet computer). The information in the action profile may comprise e.g. recipient data, content of the action message, and a type of the action message. The information in the action profile is edited by the user/owner of the sensor apparatus (1410) so that he/she can e.g. self-configure the action message to his/her liking.

The wireless communication network may comprise at least one of a wireless local area network (WLAN) and a mobile telephone network. Accordingly, the connection 1451 in Figure 14 comprises a wireless communication connection. The mobile telephone network may comprise e.g. a 2G, a 3G or a 4G mobile telephone network. The connections 1452-1457 may comprise e.g. wired or wireless Internet connections. The connection 1458 may comprise e.g. a mobile telephone connection. However, it is to be understood that these connection types are merely examples, and other communication connection types may additionally/alternatively be utilized.

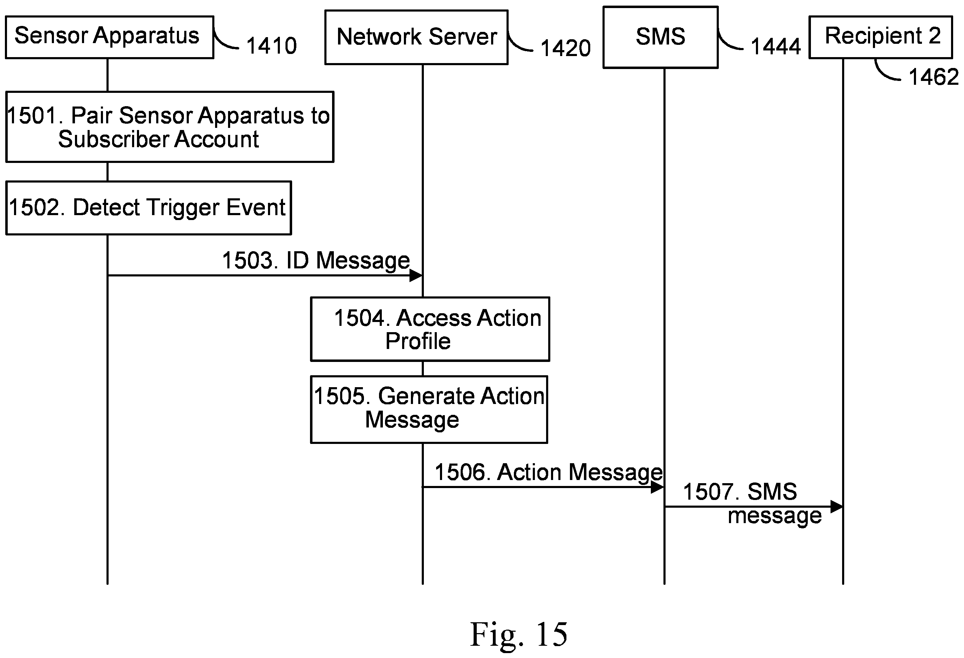

Figure 15 is a signaling diagram illustrating a method according to an embodiment of the present invention. In this embodiment, the response action comprises generating an action message based on information in the accessed action profile, and sending the generated action message to a network node based on the information in the accessed action profile. However, the response action is not limited to this. For example, as discussed above, the response action may additionally/alternatively comprise a database transaction. In the embodiment of Figure 15, the action message comprises an SMS message, but as discussed above, the invention is not restricted to SMS messages.

At step 1501, the sensor apparatus 1410 is paired to a subscriber account before first use. The pairing may comprise entering a unique device code associated with the sensor apparatus 1410 to subscriber account associated data. The unique device code may comprise e.g. an international mobile station equipment identity (IMEI) code and/or a media access control (MAC) address assigned to the wireless transmitter 1412. The unique device code may be printed on a suitable location on the surface of the sensor apparatus 1410. The pairing may further comprise entering to subscriber account associated data a description of a light signal sequence displayed by the sensor apparatus 1410. The light signal sequence may comprise e.g. a sequence of light signals of various colors, such as a red light signal, a green light signal, a green light signal, a yellow light signal, and a red light signal. In such a case, the description to be entered would comprise "red, green, green, yellow, red". The unique device code and/or the description of the light signal sequence may be entered e.g. by an owner/licensee of the sensor apparatus e.g. via a world wide web interface using e.g. a desktop computer, a laptop computer, a tablet computer, a smart phone, or the like. The subscriber account may be associated with the action profile accessed in step 1504.

The above described pairing ensures that the person entering the unique device code actually has the sensor apparatus 1410 in his/her possession.

A trigger event is sensed by the sensor device 1411 comprised in the sensor apparatus 1410, step 1502. In response, the identification message is sent from the sensor apparatus 1410 over the wireless communication network, step 1503. As discussed above, the identification message consists of a unique identifier of the sensor apparatus 1410. The identification message is received at a network server 1420, and a pre-configured action profile associated with the unique identifier in the received identification message is accessed by the network server 1420, step 1504. An action message is generated by the network server 1420 based on information in the accessed action profile, step 1505. The generated action message is sent to the network node 1444 based on the information in the accessed action profile, step 1506. The generated action message is received at the network node 1444, and in case a request is included in the received action message, the network node 1444 complies with the request. In the example of Figure 15, the network node 1444 sends an SMS message to the recipient 1462, step 1507. As discussed above, the contents and the recipient address (e.g. a telephone number in this case) of the SMS message have been preconfigured by editing the action profile.

An aspect of the present disclosure is a system that comprises a sensor apparatus that is configured to send an identification message over a wireless communication network in response to a trigger event sensed by a sensor device comprised in the sensor apparatus. The identification message consists of a unique identifier of the sensor apparatus. The system further comprises a network server that is configured to receive the identification message, access a pre-configured action profile associated with the unique identifier in the received identification message, and cause a response action to be executed based on information in the accessed action profile. The sensor apparatus comprises a button, and the trigger event consists of pressing the button no longer than a predetermined time period. A cancel event consists of pressing the button longer than the predetermined time period. The network server is further configured to cause a cancel action to be executed for cancelling the response action associated with the previous trigger event in response to detecting the cancel event.

Another aspect of the present disclosure is a method in which an identification message is sent from a sensor apparatus, over a wireless communication network, in response to a trigger event sensed by a sensor device comprised in the sensor apparatus. The identification message consists of a unique identifier of the sensor apparatus. The identification message is received at a network server. A pre-configured action profile associated with the unique identifier in the received identification message is accessed by the network server. The network server causes a response action to be executed based on information in the accessed action profile. The sensor apparatus comprises a button, and the trigger event consists of pressing the button no longer than a predetermined time period. A cancel event consists of pressing the button longer than the predetermined time period. The method further comprises causing, in response to detecting the cancel event, a cancel action to be executed for cancelling the response action associated with the previous trigger event.

Another aspect of the present disclosure is a sensor apparatus that comprises a sensor device configured to sense a trigger event. The sensor apparatus further comprises a wireless transmitter configured to send an identification message over a wireless communication network to a network server in response to the trigger event sensed by sensor device. The identification message consists of a unique identifier of the sensor apparatus. The sensor apparatus comprises a button, and the trigger event consists of pressing the button no longer than a predetermined time period. A cancel event consists of pressing the button longer than the predetermined time period, the cancel event triggering cancelling of the response action associated with the previous trigger event.

Another aspect of the present disclosure is a network server that comprises at least one processor and at least one memory including computer program code. The at least one memory and the computer program code are configured to, with the at least one processor, cause the network server at least to perform:
receiving an identification message sent by a sensor apparatus over a wireless communication network in response to a trigger event sensed by a sensor device comprised in the sensor apparatus, the identification message consisting of a unique identifier of the sensor apparatus;
accessing a pre-configured action profile associated with the unique identifier in the received identification message; and
causing a response action to be executed based on information in the accessed action profile. The sensor apparatus comprises a button, and the trigger event consists of pressing the button no longer than a predetermined time period. A cancel event consists of pressing the button longer than the predetermined time period. The at least one memory and the computer program code are configured to, with the at least one processor, further cause the network server to perform: causing a cancel action to be executed for cancelling the response action associated with the previous trigger event in response to detecting the cancel event.

In an embodiment of the present disclosure, the response action comprises a database transaction.

In an embodiment of the present disclosure, the response action comprises generating an action message based on information in the accessed action profile, and sending the generated action message to a network node based on the information in the accessed action profile.

In an embodiment of the present disclosure, the information in the action profile comprises recipient data, content of the action message, and a type of the action message.

It is to be understood that the aspects and embodiments of the present disclosure described above may be used in any combination with each other. Several of the aspects and embodiments may be combined together to form a further embodiment of the present disclosure. A system, a method, a sensor apparatus, or a network server which is an aspect of the present disclosure may comprise at least one of the embodiments of the present disclosure described above.

The aspects of the present disclosure allow an extremely simple and inexpensive way to interact with e.g. various Internet and mobile telecommunications related services, for example by a single button press. The aspects of the present disclosure further allow a simple to use cancel option for cancelling a response action, for example if the button was pressed by accident.

Accordingly, the aspects of the present disclosure introduce a solution that allows an extremely simple way to interact with e.g. various Internet and mobile telecommunications related services, for example by a single button press, and that allows a simple to use cancel option for cancelling a response action, for example if the button was pressed by accident. The aspects of the present disclosure relate to trigger event based response execution with a cancel option.

Another aspect of the present disclosure is a system that comprises a sensor apparatus that is configured to send an identification message over a wireless communication network in response to a trigger event sensed by a sensor device comprised in the sensor apparatus. The identification message consists of a unique identifier of the sensor apparatus. The system further comprises a network server that is configured to receive the identification message, access a pre-configured action profile associated with the unique identifier in the received identification message, and cause a response action to be executed based on information in the accessed action profile. The sensor apparatus comprises a button, and the trigger event consists of pressing the button. The sensor apparatus is further configured to be switched on in response to the pressing of the button.

Another aspect of the present disclosure is a method in which an identification message is sent from a sensor apparatus, over a wireless communication network, in response to a trigger event sensed by a sensor device comprised in the sensor apparatus. The identification message consists of a unique identifier of the sensor apparatus. The identification message is received at a network server. A pre-configured action profile associated with the unique identifier in the received identification message is accessed by the network server. The network server causes a response action to be executed based on information in the accessed action profile. The sensor apparatus comprises a button, and the trigger event consists of pressing the button. The method further comprises switching the sensor apparatus on in response to the pressing of the button.

Another aspect of the present disclosure is a sensor apparatus that comprises a sensor device configured to sense a trigger event. The sensor apparatus further comprises a wireless transmitter configured to send an identification message over a wireless communication network to a network server in response to the trigger event sensed by sensor device. The identification message consists of a unique identifier of the sensor apparatus. The sensor apparatus further comprises a button, and the trigger event consists of pressing the button. The sensor apparatus is configured to be switched on in response to the pressing of the button.

In an embodiment of the present disclosure, the response action comprises a database transaction.

In an embodiment of the present disclosure, the response action comprises generating an action message based on information in the accessed action profile, and sending the generated action message to a network node based on the information in the accessed action profile.

In an embodiment of the present disclosure, the sensor apparatus is further configured to be automatically switched off after a predetermined time period.

In an embodiment of the present disclosure, the information in the action profile comprises recipient data, content of the action message, and a type of the action message.

It is to be understood that the aspects and embodiments of the present disclosure described above may be used in any combination with each other. Several of the aspects and embodiments may be combined together to form a further embodiment of the present disclosure. A system, a method, or a sensor apparatus which is an aspect of the present disclosure may comprise at least one of the embodiments of the present disclosure described above.

The aspects of the present disclosure allows an extremely simple and inexpensive way to interact with e.g. various Internet and mobile telecommunications related services, for example by a single button press. The aspects of the present disclosure further allows automatic power on/off, thereby allowing e.g. saving power and preventing electromagnetic radiation.

Accordingly, the aspects of the present disclosure introduce a solution that allows an extremely simple way to interact with e.g. various Internet and mobile telecommunications related services, for example by a single button press, and that allows automatic power on/off, thereby allowing e.g. saving power and preventing electromagnetic radiation. The aspects of the present disclosure relate to trigger event based response execution with automatic power on/off.

Another aspect of the present disclosure is a system that comprises a sensor apparatus that is configured to send an identification message over a wireless communication network in response to a trigger event sensed by a sensor device comprised in the sensor apparatus. The identification message consists of a unique identifier of the sensor apparatus. The system further comprises a network server that is configured to receive the identification message, access a pre-configured action profile associated with the unique identifier in the received identification message, and cause a response action to be executed based on information in the accessed action profile. The sensor apparatus comprises a button, and the trigger event consists of pressing the button down. The sensor apparatus is further configured to keep the button pressed down until instructed by the network server to return the button to its initial position.

Another aspect of the present disclosure is a method in which an identification message is sent from a sensor apparatus, over a wireless communication network, in response to a trigger event sensed by a sensor device comprised in the sensor apparatus. The identification message consists of a unique identifier of the sensor apparatus. The identification message is received at a network server. A pre-configured action profile associated with the unique identifier in the received identification message is accessed by the network server. The network server causes a response action to be executed based on information in the accessed action profile. The sensor apparatus comprises a button, and the trigger event consists of pressing the button down. The method further comprises causing the button being kept pressed down until instructed by the network server to return the button to its initial position.

Another aspect of the present disclosure is a sensor apparatus that comprises a sensor device configured to sense a trigger event. The sensor apparatus further comprises a wireless transmitter configured to send an identification message over a wireless communication network to a network server in response to the trigger event sensed by sensor device. The identification message consists of a unique identifier of the sensor apparatus. The sensor apparatus comprises a button, and the trigger event consists of pressing the button down. The sensor apparatus is further configured to keep the button pressed down until instructed by the network server to return the button to its initial position.

In an embodiment of the present disclosure, the response action comprises a database transaction.

In an embodiment of the present disclosure, the response action comprises generating an action message based on information in the accessed action profile, and sending the generated action message to a network node based on the information in the accessed action profile.

In an embodiment of the present disclosure, the information in the action profile comprises recipient data, content of the action message, and a type of the action message.

In an embodiment of the present disclosure, the sensor apparatus is instructed by the network server to return the button to its initial position in response to the network server successfully receiving the identification message.

It is to be understood that the aspects and embodiments of the present disclosure described above may be used in any combination with each other. Several of the aspects and embodiments may be combined together to form a further embodiment of the present disclosure. A system, a method, or a sensor apparatus which is an aspect of the present disclosure may comprise at least one of the embodiments of the present disclosure described above.

The aspects of the present disclosure allow an extremely simple and inexpensive way to interact with e.g. various Internet and mobile telecommunications related services, for example by a single button press. The aspects of the present disclosure further allow prevention of unintentional button presses.

Accordingly, the aspects of the present disclosure introduce a solution that allows an extremely simple way to interact with e.g. various Internet and mobile telecommunications related services, for example by a single button press, and that allows prevention of unintentional button presses. The aspects of the present disclosure relate to trigger event based response execution with unintentional button press prevention.

Another aspect of the present disclosure is a system that comprises a sensor apparatus that is configured to send an identification message over a wireless communication network in response to a trigger event sensed by a sensor device comprised in the sensor apparatus. The identification message consists of a unique identifier of the sensor apparatus. The system further comprises a network server that is configured to receive the identification message, access a pre-configured action profile associated with the unique identifier in the received identification message, and cause a response action to be executed based on information in the accessed action profile. The sensor apparatus is further configured to be paired to a subscriber account before first use.

Another aspect of the present disclosure is a method in which an identification message is sent from a sensor apparatus, over a wireless communication network, in response to a trigger event sensed by a sensor device comprised in the sensor apparatus. The identification message consists of a unique identifier of the sensor apparatus. The identification message is received at a network server. A pre-configured action profile associated with the unique identifier in the received identification message is accessed by the network server. The network server causes a response action to be executed based on information in the accessed action profile. The method further comprises pairing the sensor apparatus to a subscriber account before first use.

Another aspect of the present disclosure is a sensor apparatus that comprises a sensor device configured to sense a trigger event. The sensor apparatus further comprises a wireless transmitter configured to send an identification message over a wireless communication network to a network server in response to the trigger event sensed by sensor device. The identification message consists of a unique identifier of the sensor apparatus. The sensor apparatus is further configured to be paired to a subscriber account before first use.

In an embodiment of the present disclosure, the response action comprises a database transaction.

In an embodiment of the present disclosure, the response action comprises generating an action message based on information in the accessed action profile, and sending the generated action message to a network node based on the information in the accessed action profile.

In an embodiment of the present disclosure, the pairing comprises entering to subscriber account associated data a unique device code associated with the sensor apparatus.

In an embodiment of the present disclosure, the pairing further comprises entering to subscriber account associated data a description of a light signal sequence displayed by the sensor apparatus.

In an embodiment of the present disclosure, the sensor device is semiconductor based, and the sensed trigger event comprises a trigger event measurable with a semiconductor based sensor device.

In an embodiment of the present disclosure, the sensed trigger event relates to at least one of: touching the sensor apparatus, illumination in proximity of the sensor apparatus, temperature in proximity of the sensor apparatus, position of the sensor apparatus, acceleration of the sensor apparatus, compass heading of the sensor apparatus, velocity of the sensor apparatus, and motion in proximity of the sensor apparatus.

In an embodiment of the present disclosure, the sensor apparatus comprises a button, and the trigger event consists of touching and pressing the button.

In an embodiment of the present disclosure, the sensor apparatus comprises one of a computing device with a touch screen and a computing device with a non-touch screen; and the trigger event consists of one of touching an object drawn on the touch screen and clicking an object drawn on the non-touch screen, respectively.

In an embodiment of the present disclosure, the information in the action profile comprises recipient data, content of the action message, and a type of the action message.

It is to be understood that the aspects and embodiments of the present disclosure described above may be used in any combination with each other. Several of the aspects and embodiments may be combined together to form a further embodiment of the invention. A system, a method, or a sensor apparatus which is an aspect of the invention may comprise at least one of the embodiments of the invention described above.

The aspects of the present disclosure allows an extremely simple and inexpensive way to interact with e.g. various Internet and mobile telecommunications related services, for example by a single button press. The aspects of the present further allow secure initialization of the sensor apparatus.

Accordingly, the aspects of the present disclosure introduce a solution that allows an extremely simple way to interact with e.g. various Internet and mobile telecommunications related services, for example by a single button press, and that allows secure initialization. The aspects of the present disclosure relate to trigger event based response execution with secure initialization.

The exemplary embodiments can include, for example, any suitable servers, workstations, PCs, laptop computers, other devices, and the like, capable of performing the processes of the exemplary embodiments. The devices and subsystems of the exemplary embodiments can communicate with each other using any suitable protocol and can be implemented using one or more programmed computer systems or devices.

It is to be understood that the exemplary embodiments are for exemplary purposes, as many variations of the specific hardware used to implement the exemplary embodiments are possible, as will be appreciated by those skilled in the hardware and/or software art(s). For example, the functionality of one or more of the components of the exemplary embodiments can be implemented via one or more hardware and/or software devices.

The exemplary embodiments can store information relating to various processes described herein. This information can be stored in one or more memories, such as a hard disk, optical disk, magneto-optical disk, RAM, and the like. One or more databases can store the information used to implement the exemplary embodiments of the present disclosure. The databases can be organized using data structures (e.g., records, tables, arrays, fields, graphs, trees, lists, and the like) included in one or more memories or storage devices listed herein. The processes described with respect to the exemplary embodiments can include appropriate data structures for storing data collected and/or generated by the processes of the devices and subsystems of the exemplary embodiments in one or more databases.

All or a portion of the exemplary embodiments can be conveniently implemented using one or more general purpose processors, microprocessors, digital signal processors, micro-controllers, and the like, programmed according to the teachings of the exemplary embodiments of the present disclosure, as will be appreciated by those skilled in the computer and/or software art(s). Appropriate software can be readily prepared by programmers of ordinary skill based on the teachings of the exemplary embodiments, as will be appreciated by those skilled in the software art. In addition, the exemplary embodiments can be implemented by the preparation of application-specific integrated circuits or by interconnecting an appropriate network of conventional component circuits, as will be appreciated by those skilled in the electrical art(s). Thus, the exemplary embodiments are not limited to any specific combination of hardware and/or software.

Stored on any one or on a combination of computer readable media, the exemplary embodiments of the present disclosure can include software for controlling the components of the exemplary embodiments, for driving the components of the exemplary embodiments, for enabling the components of the exemplary embodiments to interact with a human user, and the like. Such software can include, but is not limited to, device drivers, firmware, operating systems, development tools, applications software, and the like. Such computer readable media further can include the computer program product of an embodiment of the present disclosure for performing all or a portion (if processing is distributed) of the processing performed in implementing the aspects of the present disclosure. Computer code devices of the exemplary embodiments of the present disclosure can include any suitable interpretable or executable code mechanism, including but not limited to scripts, interpretable programs, dynamic link libraries (DLLs), Java classes and applets, complete executable programs, Common Passenger Request Broker Architecture (CORBA) passengers, and the like. Moreover, parts of the processing of the exemplary embodiments of the present disclosure can be distributed for better performance, reliability, cost, and the like.

As stated above, the components of the exemplary embodiments can include computer readable medium or memories for holding instructions programmed according to the teachings of the present disclosure and for holding data structures, tables, records, and/or other data described herein. Computer readable medium can include any suitable medium that participates in providing instructions to a processor for execution. Such a medium can take many forms, including but not limited to, non-volatile media, volatile media, and the like. Non-volatile media can include, for example, optical or magnetic disks, magneto-optical disks, and the like. Volatile media can include dynamic memories, and the like. Common forms of computer-readable media can include, for example, a floppy disk, a flexible disk, hard disk, magnetic tape, any other suitable magnetic medium, a CD-ROM, CD±R, CD±RW, DVD, DVD-RAM, DVD±RW, DVD±R, HD DVD, HD DVD-R, HD DVD-RW, HD DVD-RAM, Blu-ray Disc, any other suitable optical medium, punch cards, paper tape, optical mark sheets, any other suitable physical medium with patterns of holes or other optically recognizable indicia, a RAM, a PROM, an EPROM, a FLASH-EPROM, any other suitable memory chip or cartridge, or any other suitable medium from which a computer can read.

While the aspects of the present disclosure have been described in connection with a number of exemplary embodiments, and implementations, the aspects of the present disclosure are not so limited, but rather cover various modifications, and equivalent arrangements, which fall within the purview of prospective claims.

## Claims

1. A system comprising:
a sensor apparatus (110, 510, 810, 1110, 1410), comprising a sensor device configured to sense a trigger event related to at least one of touching the sensor apparatus, illumination in proximity of the sensor apparatus, temperature in proximity of the sensor apparatus, position of the sensor apparatus, acceleration of the sensor apparatus, compass heading of the sensor apparatus, velocity of the sensor apparatus, and motion in proximity of the sensor apparatus and configured to send an identification message (202, 602, 903, 1202, 1503) over a wireless communication network in response to a trigger event sensed by the sensor device (111, 511, 811, 1111, 1411) comprised in the sensor apparatus, the identification message consisting of a unique identifier of the sensor apparatus; and
a network server (120, 520, 820, 1120, 1420), configured to receive the identification message, access a pre-configured action profile associated with the unique identifier in the received identification message, and cause a response action to be executed based on information in the accessed action profile,
wherein the response action comprises generating an action message based on information in the accessed action profile, and sending the generated action message to a network node based on the information in the accessed action profile.

2. The system according to claim 1, further comprising:
at least one network node, configured to receive the generated action message, and in case a request is included in the received action message, to comply with the request.

3. The system according to claim 1, wherein the action message comprises at least one of a service request, an emergency call, a toggle request, and a counter notification.

4. The system according to claim 1, wherein the sensor apparatus comprises a button, and the trigger event consists of pressing the button.

5. The system according to claim 1, wherein the information in the action profile comprises recipient data, content of the action message, and a type of the action message.

6. The system according to claim 1, wherein the sensor apparatus is further configured to receive a feedback message, and to provide a feedback signal in response to the received feedback message.

7. The system according to claim 1, wherein the information in the action profile defines the response action to be executed based on at least one of frequency, amount and lack of received identification messages.

8. The system according to claim 1, wherein the network server is further configured to receive one or more feedback messages, and the information in the action profile defines the response action to be executed based on at least one of frequency, amount and lack of received feedback messages.

9. A method comprising:
sensing by a sensor device comprised in a sensor apparatus a trigger event related to at least one of touching the sensor apparatus, illumination in proximity of the sensor apparatus, temperature in proximity of the sensor apparatus, position of the sensor apparatus, acceleration of the sensor apparatus, compass heading of the sensor apparatus, velocity of the sensor apparatus, and motion in proximity of the sensor apparatus,
sending, from the sensor apparatus, an identification message over a wireless communication network in response to the trigger event sensed by the sensor device comprised in the sensor apparatus, the identification message consisting of a unique identifier of the sensor apparatus;
receiving the identification message at a network server;
accessing (203, 603, 904, 1205, 1504), by the network server, a pre-configured action profile associated with the unique identifier in the received identification message; and
causing, by the network server, a response action to be executed based on information in the accessed action profile,
wherein the response action comprises generating an action message based on information in the accessed action profile, and sending the generated action message to a network node based on the information in the accessed action profile.

10. The method according to claim 9, further comprising:
receiving the generated action message at the network node; and
in case a request is included in the received action message, complying with the request.

11. A network server (120, 520, 820, 1120, 1420), comprising:
at least one processor (121, 521, 821, 1121, 1421); and
at least one memory (122, 522, 822, 1122, 1422) including computer program code;
the at least one memory and the computer program code being configured to, with the at least one processor, cause the network server at least to perform:
receiving an identification message (202, 602, 903, 1202, 1503) sent by a sensor apparatus (110, 510, 810, 1110, 1410) over a wireless communication network in response to a trigger event sensed by a sensor device (111, 511, 811, 1111, 1411) comprised in the sensor apparatus,
wherein the trigger event is related to at least one of touching the sensor apparatus, illumination in proximity of the sensor apparatus, temperature in proximity of the sensor apparatus, position of the sensor apparatus, acceleration of the sensor apparatus, compass heading of the sensor apparatus, velocity of the sensor apparatus, and motion in proximity of the sensor apparatus,
the identification message consisting of a unique identifier of the sensor apparatus;
accessing a pre-configured action profile associated with the unique identifier in the received identification message; and
causing a response action to be executed based on information in the accessed action profile,
wherein the response action comprises generating an action message based on information in the accessed action profile, and sending the generated action message to a network node based on the information in the accessed action profile.

## Patentansprüche

1. Ein System, umfassend:
eine Sensorvorrichtung (110, 510, 810, 1110, 1410), die ein Sensorgerät umfasst, das so konfiguriert ist, um ein Trigger-Ereignis zu erfassen, zusammenhängend mit mindestens einem der folgenden: Berührung der Sensorvorrichtung, Beleuchtung in der Nähe der Sensorvorrichtung, Temperatur in der Nähe der Sensorvorrichtung, Position der Sensorvorrichtung, Beschleunigung der Sensorvorrichtung, Kompasskurs der Sensorvorrichtung, Geschwindigkeit der Sensorvorrichtung und Bewegung in der Nähe der Sensorvorrichtung, und
konfiguriert, um eine Identifikationsnachricht (202, 602, 903, 1202, 1503) über ein drahtloses Kommunikationsnetzwerk als Antwort auf ein Trigger-Ereignis, das von dem Sensorgerät (111, 511, 811, 1111, 1411) erfasst wird, das in der Sensorvorrichtung umfasst ist, wobei die Identifikationsnachricht aus einer eindeutigen Kennung der Sensorvorrichtung besteht; und
einen Netzwerkserver (120, 520, 820, 1120, 1420), der so konfiguriert ist, dass er die Identifikationsnachricht empfängt, auf ein vorkonfiguriertes Aktionsprofil zugreift, das der eindeutigen Kennung in der empfangenen Identifikationsnachricht zugeordnet ist, und veranlasst, dass eine Antwort-Aktion basierend auf Informationen in dem Aktionsprofil, auf das zugegriffen wurde, ausgeführt wird,
wobei die Antwort-Aktion das Erzeugen einer Action-Message basierend auf Informationen in dem Aktionsprofil, auf das zugegriffen wurde, und das Senden der erzeugten Action-Message an einen Netzwerkknoten basierend auf den Informationen in dem Aktionsprofil, auf das zugegriffen wurde, umfasst.

2. Das System gemäß Anspruch 1, ferner umfassend:
mindestens einen Netzwerkknoten, der so konfiguriert ist, dass er die erzeugte Action-Message empfängt und, falls eine Abfrage in der empfangenen Action-Message enthalten ist, der Abfrage nachkommt.

3. Das System gemäß Anspruch 1, wobei die Action-Message mindestens eine von einer Dienst-Abfrage, einem Notruf, einer Umschaltabfrage, und einer Zählermeldung umfasst.

4. Das System gemäß Anspruch 1, wobei die Sensorvorrichtung eine Taste umfasst, und das Trigger-Ereignis aus dem Drücken der Taste besteht.

5. Das System gemäß Anspruch 1, wobei die Information in dem Aktionsprofil Empfängerdaten, Inhalt der Action-Message und einen Typ der Action-Message umfasst.

6. Das System gemäß Anspruch 1, wobei die Sensorvorrichtung ferner so konfiguriert ist, um eine Rückmeldung zu empfangen, und um ein Rückmeldesignal als Antwort auf die empfangene Rückmeldung bereitzustellen.

7. Das System gemäß Anspruch 1, wobei die Informationen in dem Aktionsprofil die auszuführende Antwort-Aktion definieren, die auf mindestens einer der folgenden Informationen basiert: Häufigkeit, Menge und Mangel an empfangenen Identifikationsnachrichten.

8. Das System gemäß Anspruch 1, wobei der Netzwerkserver ferner so konfiguriert ist, um eine oder mehrere Rückmeldungen zu empfangen, und die Informationen in dem Aktionsprofil die auszuführende Antwort-Aktion definieren, die auf mindestens einer der folgenden Informationen basiert: Häufigkeit, Menge und Mangel an empfangenen Rückmeldungen.

9. Ein Verfahren, umfassend:
Erfassen eines Trigger-Ereignisses durch ein Sensorgerät, das in der Sensorvorrichtung umfasst ist, wobei das Trigger-Ereignis mit mindestens einem der folgenden Ereignisse zusammenhängt: Berührung der Sensorvorrichtung, Beleuchtung in der Nähe der Sensorvorrichtung, Temperatur in der Nähe der Sensorvorrichtung, Position der Sensorvorrichtung, Beschleunigung der Sensorvorrichtung, Kompasskurs der Sensorvorrichtung, Geschwindigkeit der Sensorvorrichtung und Bewegungen in der Nähe der Sensorvorrichtung,
Senden, von der Sensorvorrichtung, einer Identifikationsnachricht über ein drahtloses Kommunikationsnetzwerk als Antwort auf das Trigger-Ereignis, das von dem Sensorgerät erfasst wird, das in der Sensorvorrichtung umfasst ist, wobei die Identifikationsnachricht aus einer eindeutigen Kennung der Sensorvorrichtung besteht;
Empfangen der Identifikationsnachricht an einem Netzwerkserver,
Zugreifen (203, 603, 904, 1205, 1504) auf ein vorkonfiguriertes Aktionsprofil, durch den Netzwerkserver, das der eindeutigen Kennung in der empfangenen Identifikationsnachricht zugeordnet ist; und
Veranlassen, durch den Netzwerkserver, dass eine Antwort-Aktion basierend auf Informationen in dem Aktionsprofil, auf das zugegriffen wurde, ausgeführt wird
wobei die Antwort-Aktion das Erzeugen einer Action-Message, basierend auf Informationen in dem Aktionsprofil, auf das zugegriffen wurde, und das Senden der erzeugten Action-Message an einen Netzwerkknoten, basierend auf den Informationen in dem Aktionsprofil, auf das zugegriffen wurde, umfasst.

10. Das Verfahren gemäß Anspruch 9, ferner umfassend:
Empfangen der erzeugten Action-Message an dem Netzwerkknoten; und
falls eine Abfrage in der empfangenen Action-Message enthalten ist, Nachkommen der Abfrage.

11. Ein Netzwerkserver (120, 520, 820, 1120, 1420) umfassend:
mindestens einen Prozessor (121, 521, 821, 1121, 1421); und
mindestens einen Speicher (122, 522, 822, 1122, 1422) mit Computer-Programmcode;
der mindestens eine Speicher und der Computer-Programmcode so konfiguriert sind, dass sie mit dem mindestens einen Prozessor mindestens die Ausführung Netzwerkservers veranlassen:
Empfangen der Identifikationsnachricht (202, 602, 903, 1202, 1503) gesendet von einer Sensorvorrichtung (110, 510, 810, 1110, 1410) über ein drahtloses Kommunikationsnetzwerk als Antwort auf ein Trigger-Ereignis, das von dem Sensorgerät (111, 511, 811, 1111, 1411) erfasst wird, das in der Sensorvorrichtung umfasst ist,
wobei das Trigger-Ereignis mit mindestens einem der folgenden zusammenhängt: Berührung der Sensorvorrichtung, Beleuchtung in der Nähe der Sensorvorrichtung, Temperatur in der Nähe der Sensorvorrichtung, Position der Sensorvorrichtung, Beschleunigung der Sensorvorrichtung, Kompasskurs der Sensorvorrichtung, Geschwindigkeit der Sensorvorrichtung und Bewegung in der Nähe der Sensorvorrichtung,
die Identifikationsnachricht bestehend aus einer eindeutigen Kennung der Sensorvorrichtung;
Zugreifen auf ein vorkonfiguriertes Aktionsprofil, durch den Netzwerkserver, das der eindeutigen Kennung in der empfangenen Identifikationsnachricht zugeordnet ist; und
Veranlassen, durch den Netzwerkserver, dass eine Antwort-Aktion basierend auf Informationen in dem Aktionsprofil, auf das zugegriffen wurde, ausgeführt wird
wobei die Antwort-Aktion das Erzeugen einer Action-Message, basierend auf Informationen in dem Aktionsprofil, auf das zugegriffen wurde, und das Senden der erzeugten Action-Message an einen Netzwerkknoten, basierend auf den Informationen in dem Aktionsprofil, auf das zugegriffen wurde, umfasst.

## Revendications

1. Système, comprenant :
un appareil capteur (110, 510, 810, 1110, 1410), comprenant un dispositif capteur configuré pour détecter un événement déclencheur associé à au moins un événement parmi un effleurement de l'appareil capteur, un éclairement lumineux au voisinage de l'appareil capteur, une température au voisinage de l'appareil capteur, une position de l'appareil capteur, une accélération de l'appareil capteur, un cap compas de l'appareil capteur, une vitesse de l'appareil capteur et un mouvement au voisinage de l'appareil capteur, et configuré pour envoyer un message d'identification (202, 602, 903, 1202, 1503) à travers un réseau de communication sans fil en réponse à un événement déclencheur détecté par le dispositif capteur (111, 511, 811, 1111, 1411) compris dans l'appareil capteur, le message d'identification étant constitué d'un identifiant unique de l'appareil capteur ; et
un serveur de réseau (120, 520, 820, 1120, 1420), configuré pour recevoir le message d'identification, pour accéder à un profil d'action prédéterminé associé à l'identifiant unique du message d'identification reçu, et pour provoquer une action de réponse à exécuter sur la base d'informations comprises dans le profil d'action ayant fait l'objet d'un accès,
dans lequel l'action de réponse consiste à générer un message d'action sur la base d'informations du profil d'action ayant fait l'objet d'un accès, et à envoyer le message d'action généré à un nœud de réseau sur la base des informations du profil d'action ayant fait l'objet d'un accès.

2. Système selon la revendication 1, comprenant en outre :
au moins un nœud de réseau configuré pour recevoir le message d'action généré et, dans un cas dans lequel une requête est comprise dans le message d'action reçu, pour satisfaire la requête.

3. Système selon la revendication 1, dans lequel le message d'action comprend au moins une action parmi une demande de service, un appel d'urgence, une demande de bascule et une notification de compteur.

4. Système selon la revendication 1, dans lequel l'appareil capteur comprend un bouton, et l'événement déclencheur correspond à un appui sur le bouton.

5. Système selon la revendication 1, dans lequel les informations du profil d'action comprennent des données de destinataire, un contenu du message d'action et un type du message d'action.

6. Système selon la revendication 1, dans lequel l'appareil capteur est en outre configuré pour recevoir un message de rétroaction et pour fournir un signal de rétroaction en réponse au message de rétroaction reçu.

7. Système selon la revendication 1, dans lequel les informations du profil d'action définissent l'action de réponse à exécuter sur la base d'au moins un élément parmi une fréquence, une quantité et un manque de messages d'identification reçus.

8. Système selon la revendication 1, dans lequel le serveur de réseau est en outre configuré pour recevoir un ou plusieurs messages de rétroaction, et les informations du profil d'action définissent l'action de réponse à exécuter sur la base d'au moins un élément parmi une fréquence, une quantité et un manque de messages de rétroaction reçus.

9. Procédé comprenant :
détecter, par un dispositif capteur compris dans un appareil capteur, un événement déclencheur associé à au moins un événement parmi un effleurement de l'appareil capteur, un éclairement lumineux au voisinage de l'appareil capteur, une température au voisinage de l'appareil capteur, une position de l'appareil capteur, une accélération de l'appareil capteur, un cap compas de l'appareil capteur, une vitesse de l'appareil capteur et un mouvement au voisinage de l'appareil capteur,
envoyer, par l'appareil capteur, un message d'identification à travers un réseau de communication sans fil en réponse à l'événement déclencheur détecté par le dispositif capteur compris dans l'appareil capteur, le message d'identification étant constitué d'un identifiant unique de l'appareil capteur ;
recevoir le message d'identification au niveau d'un serveur de réseau ;
accéder (203, 603, 904, 1205, 1504), par le serveur de réseau, à un profil d'action prédéterminé associé à l'identifiant unique du message d'identification reçu ; et
provoquer, par le serveur de réseau, une action de réponse à exécuter sur la base d'informations du profil d'action ayant fait l'objet d'un accès,
dans lequel l'action de réponse consiste à générer un message d'action sur la base d'informations du profil d'action ayant fait l'objet d'un accès et à envoyer le message d'action généré à un nœud de réseau sur la base des informations du profil d'action ayant fait l'objet d'un accès.

10. Procédé selon la revendication 9, comprenant en outre :
recevoir le message d'action généré au niveau du nœud de réseau ; et
dans un cas dans lequel une requête est comprise dans le message d'action reçu, satisfaire la requête.

11. Serveur de réseau (120, 520, 820, 1120, 1420), comprenant :
au moins un processeur (121, 521, 821, 1121, 1421) ; et
au moins une mémoire (122, 522, 822, 1122, 1422) comprenant un code de programme informatique ;
l'au moins une mémoire et le code de programme informatique étant configurés pour, au moyen de l'au moins un processeur, amener le serveur de réseau à au moins mettre en œuvre :
recevoir un message d'identification (202, 602, 903, 1202, 1503) envoyé par un appareil capteur (110, 510, 810, 1110, 1410) à travers un réseau de communication sans fil en réponse à un événement déclencheur détecté par un dispositif capteur (111, 511, 811, 1111, 1411) compris dans l'appareil capteur,
dans lequel l'événement déclencheur est associé à au moins un événement parmi un effleurement de l'appareil capteur, un éclairement lumineux au voisinage de l'appareil capteur, une température au voisinage de l'appareil capteur, une position de l'appareil capteur, une accélération de l'appareil capteur, un cap compas de l'appareil capteur, une vitesse de l'appareil capteur et un mouvement au voisinage de l'appareil capteur,
le message d'identification étant constitué d'un identifiant unique de l'appareil capteur ;
accéder à un profil d'action prédéterminé associé à l'identifiant unique du message d'identification reçu ; et
provoquer une action de réponse à exécuter sur la base d'informations du profil d'action ayant fait l'objet d'un accès,
dans lequel l'action de réponse consiste à générer un message d'action sur la base d'informations du profil d'action ayant fait l'objet d'un accès et à envoyer le message d'action généré à un nœud de réseau sur la base des informations du profil d'action ayant fait l'objet d'un accès.
